# EUROPEAN PATENT APPLICATION

(11) **EP 4 319 240 A1**
(43) Date of publication of application: **07.02.2024**
(21) Application number: 21935033.7
(22) Date of filing: 02.04.2021
(51) Int. Cl.: H04W 16/28, H04W 72/04

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); SUN, Weiqi, Beijing 100190 (CN)
(74) Representative: Hoffmann Eitle
(86) International application number: PCT/JP2021/014354
(87) International publication number: WO 2022/208872

(57) **Abstract**

A terminal according to one aspect of the present disclosure includes a receiving section that receives information indicating a plurality of transmission configuration indication (TCI) states applicable to multiple types of channels in one or more cells and that receives at least one of a Medium Access Control (MAC) control element indicating at least one of one or more TCI states out of the plurality of TCI states, a first reference signal for radio link monitoring (RLM) procedure, and a second reference signal for beam failure detection (BFD) procedure and downlink control information (DCI) indicating one or more TCI states out of the plurality of TCI states, and a control section that, when at least one of the first reference signal and the second reference signal is not configured by using a Radio Resource Control (RRC) information element, determines at least one of the first reference signal and the second reference signal on the basis of either of the MAC CE and the DCI. According to one aspect of the present disclosure, it is possible to appropriately perform at least one of RLM and BFD.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems, a terminal that performs radio link monitoring (RLM)/beam failure detection (BFD) is under study.

However, when a configuration/information element of a reference signal (RS) for the RLM/BFD is not provided, how the RS for the RLM/BFD is determined is indefinite. Unless the RS for the RLM/BFD is appropriately determined, monitoring accuracy/detection accuracy may deteriorate.

Thus, an object of the present disclosure is to provide a terminal, a radio communication method, and a base station that appropriately perform at least one of RLM and BFD.

### Solution to Problem

A terminal according to one aspect of the present disclosure includes a receiving section that receives information indicating a plurality of transmission configuration indication (TCI) states applicable to multiple types of channels in one or more cells and that receives at least one of a Medium Access Control (MAC) control element indicating at least one of one or more TCI states out of the plurality of TCI states, a first reference signal for radio link monitoring (RLM) procedure, and a second reference signal for beam failure detection (BFD) procedure and downlink control information (DCI) indicating one or more TCI states out of the plurality of TCI states, and a control section that, when at least one of the first reference signal and the second reference signal is not configured by using a Radio Resource Control (RRC) information element, determines at least one of the first reference signal and the second reference signal on the basis of either of the MAC CE and the DCI.

### Advantageous Effects of Invention

According to one aspect of the present disclosure, it is possible to appropriately perform at least one of RLM and BFD.

### Brief Description of Drawings

[FIG. 1] FIG. 1 is a diagram to show an example of simultaneous beam update across a plurality of CCs.
[FIG. 2] FIGS. 2A and 2B are each a diagram to show an example of a common beam.
[FIG. 3] FIG. 3 is a diagram to show an example of QCL configuration configurable in Rel. 15/16.
[FIG. 4] FIG. 4 is a diagram to show an example of QCL configuration unconfigurable in Rel. 15/16.

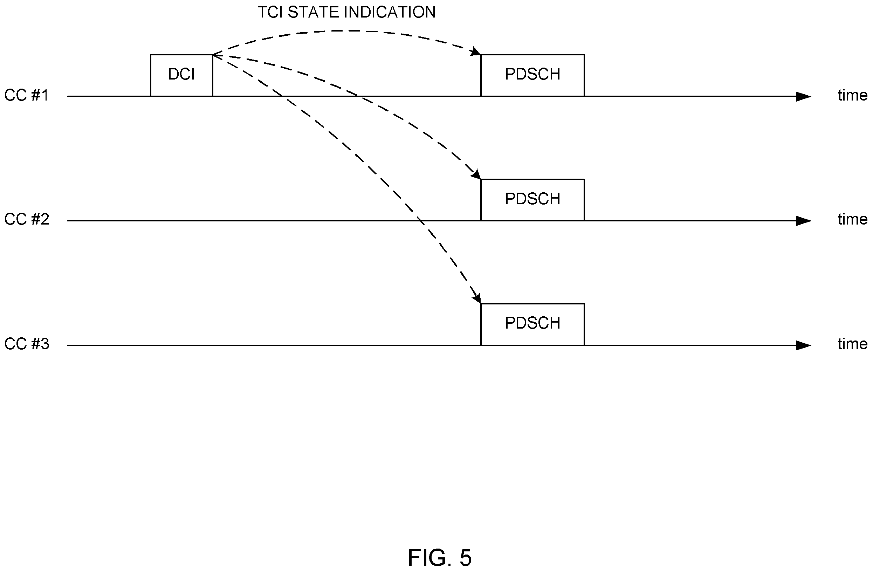

[FIG. 5] FIG. 5 is a diagram to show an example of TCI state indication in a unified TCI state framework in CA.
[FIG. 6] FIG. 6 is a diagram to show an example of a QCL constraint in case 4.
[FIG. 7] FIG. 7 is a diagram to show an example of a QCL constraint in case 5.
[FIG. 8] FIG. 8 is a diagram to show an example of the number of RLM-RSs.
[FIG. 9] FIG. 9 is a diagram to show an example of beam recovery procedure.
[FIG. 10] FIG. 10 is a diagram to show an example of update of an RLM/BFD RS according to Embodiment 1-3.
[FIG. 11] FIGS. 11A and 11B are each a diagram to show an example of RLM/BFD RS determination according to Embodiment 2-2-1.
[FIG. 12] FIG. 12 is a diagram to show an example of RLM/BFD RS determination according to Embodiment 2-2-2.
[FIG. 13] FIG. 13 is a diagram to show another example of the RLM/BFD RS determination according to Embodiment 2-2-2.
[FIG. 14] FIG. 14 is a diagram to show an example of a MAC CE according to Embodiment 3-1.
[FIG. 15] FIG. 15 is a diagram to show an example of a MAC CE according to Embodiment 3-2.
[FIG. 16] FIG. 16 is a diagram to show an example of a schematic structure of a radio communication system according to one embodiment.
[FIG. 17] FIG. 17 is a diagram to show an example of a structure of a base station according to one embodiment.
[FIG. 18] FIG. 18 is a diagram to show an example of a structure of a user terminal according to one embodiment.
[FIG. 19] FIG. 19 is a diagram to show an example of a hardware structure of the base station and the user terminal according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) in a UE regarding at least one of a signal and a channel (which is expressed as a signal/channel) based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS to have a relationship of QCL type X with (a DMRS for) a certain channel/signal, and this RS may be referred to as a QCL source of QCL type X in the TCI state.

For the PDCCH and the PDSCH, a QCL type A RS may always be configured, and a QCL type D RS may be configured additionally. It is difficult to estimate a Doppler shift, a delay, and the like by using DMRS one-shot reception, and thus the QCL type A RS is used for improvement in channel estimation accuracy. The QCL type D RS is used for receive beam determination in DMRS reception.

For example, TRS 1-1, TRS 1-2, TRS 1-3, and TRS 1-4 are transmitted, and TRS 1-1 is notified as a QCL type C/D RS by a TCI state for the PDSCH. The TCI state is notified, thereby allowing the UE to use, for reception of a DMRS for the PDSCH/channel estimation, information obtained from a result of past periodic reception/measurement of TRS 1-1. In this case, a QCL source for the PDSCH is TRS 1-1, and a QCL target is the DMRS for the PDSCH.

### (Default TCI State/Default Spatial Relation/Default PL-RS)

In an RRC connected mode, in both a case where information of TCI in DCI (higher layer parameter "TCI-PresentInDCI") is set to "enabled" and a case where the information of TCI in DCI is not configured, when time offset between reception of DL DCI (DCI to schedule a PDSCH) and a corresponding PDSCH (PDSCH scheduled by the DCI) is less than a threshold value (timeDurationForQCL) (application condition, first condition), a TCI state (default TCI state) for the PDSCH may, in a case of non-cross carrier scheduling, be a TCI state with the lowest CORESET ID in the latest slot in an active DL BWP for that CC (for a specific UL signal). Otherwise, the TCI state (default TCI state) for the PDSCH may be a TCI state with the lowest TCI state ID for a PDSCH in an active DL BWP for a scheduled CC.

In Rel. 15, respective ones of a PUCCH spatial relation activation/deactivation MAC CE and an SRS spatial relation activation/deactivation MAC CE are necessary. A PUSCH spatial relation follows an SRS spatial relation.

In Rel. 16, at least one of the PUCCH spatial relation activation/deactivation MAC CE and the SRS spatial relation activation/deactivation MAC CE may not be used.

If both a spatial relation and a PL-RS for a PUCCH are not configured in FR2 (application condition, second condition), default assumption for the spatial relation and the PL-RS (default spatial relation and default PL-RS) is applied to the PUCCH. If both a spatial relation and a PL-RS for an SRS (SRS resource for the SRS or SRS resource corresponding to SRI in DCI format 0_1 to schedule a PUSCH) are not configured in FR2 (application condition, second condition), default assumption for the spatial relation and the PL-RS (default spatial relation and default PL-RS) is applied to the PUSCH scheduled by DCI format 0_1, and the SRS.

If CORESETs are configured in an active DL BWP on that CC (application condition), the default spatial relation and the default PL-RS may be a TCI state or QCL assumption for a CORESET having the lowest CORESET ID in the active DL BWP. If CORESETs are not configured in the active DL BWP on that CC, the default spatial relation and the default PL-RS may be an active TCI state having the lowest ID for a PDSCH in the active DL BWP.

In Rel. 15, a spatial relation for a PUSCH scheduled by DCI format 0_0 follows a spatial relation for a PUCCH resource having the lowest PUCCH resource ID, out of active spatial relations for PUCCHs on the same CC. A network needs to update PUCCH spatial relations on all SCells even when the PUCCH is not transmitted on the SCells.

In Rel. 16, PUCCH configuration for the PUSCH scheduled by DCI format 0_0 is unnecessary. When an active PUCCH spatial relation or a PUCCH resource for the PUSCH scheduled by DCI format 0_0 is absent on an active UL BWP in that CC (application condition, second condition), the default spatial relation and the default PL-RS are applied to the PUSCH.

A condition for application of the default spatial relation/default PL-RS for the SRS may include a case that an information element for enabling a default beam pathloss for the SRS (higher layer parameter "enableDefaultBeamPlForSRS") is set to "enabled." A condition for application of the default spatial relation/default PL-RS for the PUCCH may include a case that an information element for enabling a default beam pathloss for the PUCCH (higher layer parameter "enableDefaultBeamPlForPUCCH") is set to "enabled." A condition for application of the default spatial relation/default PL-RS for the PUSCH scheduled by DCI format 0_0 may include a case that an information element for enabling a default beam pathloss for the PUSCH scheduled by DCI format 0_0 (higher layer parameter "enableDefaultBeamPlForPUSCH0_0") is set to "enabled."

The above-described threshold value may be referred to as a time length (time duration) for QCL, "timeDurationForQCL," "Threshold," "Threshold for offset between a DCI indicating a TCI state and a PDSCH scheduled by the DCI," "Threshold-Sched-Offset," a schedule offset threshold value, a scheduling offset threshold value, or the like.

### (Multi-TRP)

For NR, one or a plurality of transmission/reception points (TRPs) (multiple TRPs (multi TRP (MTRP))) that perform DL transmission to a UE by using one or a plurality of panels (multi panel) are under study. The UE that performs UL transmission to one or the plurality of TRPs by using one or a plurality of panels is also under study.

Note that the plurality of TRPs may correspond to the same cell identifier (ID), or may correspond to different cell IDs. The cell ID may be a physical cell ID, or may be a virtual cell ID.

The multiple TRPs (for example, TRP #1 and TRP #2) may be connected to each other by an ideal/non-ideal backhaul, and information, data, and the like may be exchanged. From respective TRPs of the multiple TRPs, different codewords (Code Words, CWs) and different layers may be transmitted. As a mode of multi-TRP transmission, non-coherent joint transmission (NCJT) may be used.

In NCJT, for example, TRP #1 performs modulation mapping and layer mapping for a first codeword to transmit a first number of layers (for example, 2 layers) and to transmit a first PDSCH by using first precoding. TRP #2 performs modulation mapping and layer mapping for a second codeword to transmit a second number of layers (for example, 2 layers) and to transmit a second PDSCH by using second precoding.

Note that a plurality of PDSCHs (multiple PDSCHs) transmitted by NCJT may be defined as PDSCHs partially or fully overlapping with each other in relation to at least one of time and frequency domains. In other words, a first PDSCH from a first TRP and a second PDSCH from a second TRP may overlap with each other in at least one of time and frequency resources.

It may be assumed that these first PDSCH and second PDSCH are not in a quasi-co-location (QCL) relationship (not quasi-co-located). Reception of the multiple PDSCHs may be interpreted as simultaneous reception of PDSCHs other than a certain QCL type (for example, QCL type D) .

A plurality of PDSCHs (which may be referred to as multiple PDSCHs) from the multiple TRPs may be scheduled by using one piece of DCI (single DCI, single PDCCH) (single master mode, multiple TRPs based on single DCI (single-DCI based multi-TRP)). A plurality of respective PDSCHs from the multiple TRPs may be scheduled by using a plurality of pieces of DCI (multiple DCI, multiple PDCCHs) (multi-master mode, multiple TRPs based on multiple DCI (multi-DCI based multi-TRP)) .

For URLLC for multiple TRPs, support for repetition of a PDSCH (transport block (TB) or codeword (CW)) across the multiple TRPs is under study. Support for repetition schemes (URLLC schemes, for example, schemes 1, 2a, 2b, 3, and 4) across the multiple TRPs on a frequency domain, a layer (spatial) domain, or a time domain is under study. In scheme 1, multiple PDSCHs from the multiple TRPs are space division multiplexed (SDMed). In schemes 2a and 2b, PDSCHs from the multiple TRPs are frequency division multiplexed (FDMed). In scheme 2a, redundancy versions (RVs) for the multiple TRPs are the same. In scheme 2b, the RVs for the multiple TRPs may be the same, or may be different from each other. In schemes 3 and 4, multiple PDSCHs from the multiple TRPs are time division multiplexed (TDMed). In scheme 3, the multiple PDSCHs from the multiple TRPs are transmitted in one slot. In scheme 4, the multiple PDSCHs from the multiple TRPs are transmitted in different slots.

According to such a multi-TRP scenario, more flexible transmission control using a channel with satisfactory quality is possible.

In order to support intra-cell (having the same cell ID) and inter-cell (having different cell IDs) multi-TRP transmissions based on multiple PDCCHs, in RRC configuration information for linking a plurality of pairs of PDCCHs and PDSCHs having multiple TRPs, one control resource set (CORESET) in PDCCH configuration information (PDCCH-Config) may correspond to one TRP.

The UE may judge that the multiple TRPs are multiple TRPs based on multiple DCI when at least one of condition 1 and condition 2 below is satisfied. In this case, the TRPs may be interpreted as CORESET pool indices.

### [Condition 1]

A CORESET pool index with 1 is configured.

### [Condition 2]

Two different values (for example, 0 and 1) of CORESET pool indices are configured.

The UE may judge that the multiple TRPs are multiple TRPs based on single DCI when the following condition is satisfied. In this case, two TRPs may be interpreted as two TCI states indicated by a MAC CE/DCI.

### [Condition]

In order to indicate one or two TCI states for one code point of a TCI field in DCI, an "enhanced TCI state activation/deactivation MAC CE for a UE-specific PDSCH (Enhanced TCI states Activation/Deactivation for UE-specific PDSCH MAC CE)" is used.

DCI for common beam indication may be a UE-specific DCI format (for example, DL DCI format (for example, 1_1 or 1_2) or UL DCI format (for example, 0_1 or 0_2)), or may be a UE-group common DCI format.

### (Simultaneous Beam Updates for Plurality of CCs)

In Rel. 16, one MAC CE can update beam indices (TCI states) of a plurality of CCs.

Up to two applicable CC lists (for example, applicable-CC-list) can be configured for the UE by RRC. When two applicable CC lists are configured, the two applicable CC lists may correspond to respective intra-band CA in FR1 and intra-band CA in FR2.

A TCI state activation MAC CE for a PDCCH activates TCI states associated with the same CORESET ID on all BWPs/CCs in the applicable CC list.

A TCI state activation MAC CE for a PDSCH activates TCI states on all BWPs/CCs in the applicable CC list.

A spatial relation activation MAC CE for an A-SRS/SP-SRS activates spatial relations associated with the same SRS resource ID on all BWPs/CCs in the applicable CC list.

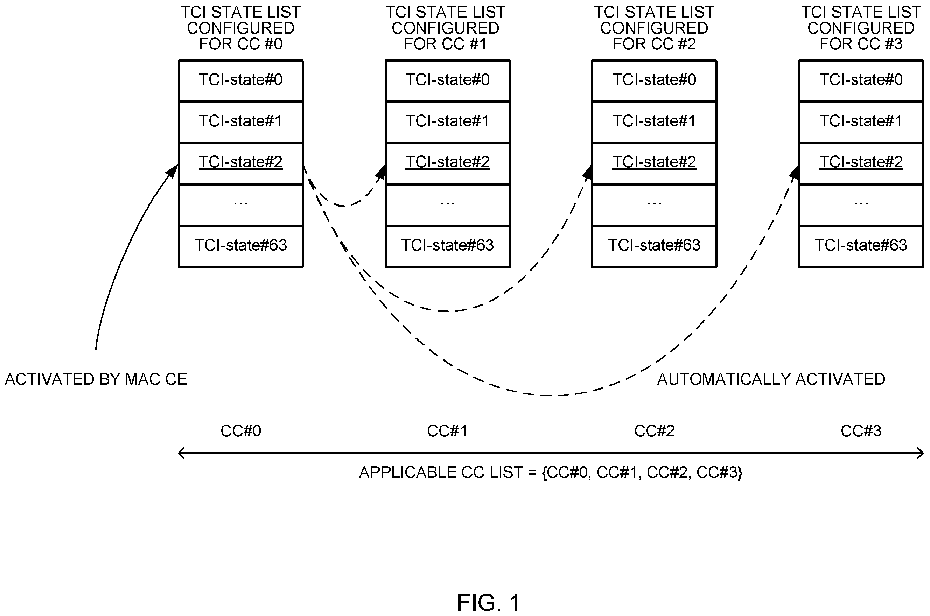

In an example of FIG. 1, an applicable CC list indicating CC #0, CC #1, CC #2, and CC #3 and a list indicating 64 TCI states for a CORESET or a PDSCH on each CC are configured for the UE. When one TCI state on CC #0 is activated by the MAC CE, a corresponding TCI state is activated on CC #1, CC #2, and CC #3.

A case that such simultaneous beam updates are applicable only to a single TRP case is under study.

For the PDSCH, the UE may be based on procedure A below.

### [Procedure A]

In one CC/DL BWP or in one set of CCs/BWPs, the UE receives an activation command for mapping up to 8 TCI states to code points of a DCI field (TCI field). When one set of TCI state IDs is activated for one set of CCs/DL BWPs, then an applicable CC list is determined by a CC indicated in the activation command, and the same set of TCI states is applied to all DL BWPs in the indicated CC. Only if a plurality of different values of CORESET pool indices (CORESETPoolIndex) in a CORESET information element (ControlResourceSet) are not provided for the UE, and at least one TCI code point mapped to two TCI states is not provided for the UE, one set of TCI state IDs can be activated for one set of CCs/DL BWPs.

For the PDCCH, the UE may be based on procedure B below.

### [Procedure B]

If up to two lists of cells for simultaneous TCI state activation using a simultaneous TCI update list (at least one of simultaneousTCI-UpdateList-r16 and simultaneousTCI-UpdateListSecond-r16) are provided for the UE by a simultaneous TCI cell list (simultaneousTCI-CellList), the UE applies, to CORESETs having index p in all configured DL BWPs of all configured cells in one list determined on the basis of a serving cell index provided by a MAC CE command, antenna port quasi co-location (QCL) provided by TCI states having the same activated TCI state ID value. Only if a plurality of different values of CORESET pool indices (CORESETPoolIndex) in a CORESET information element (ControlResourceSet) are not provided for the UE, and at least one TCI code point mapped to two TCI states is not provided for the UE, the simultaneous TCI cell list can be provided for the simultaneous TCI state activation.

For a semi-persistent (SP)/aperiodic (AP)-SRS, the UE may be based on procedure C below.

### [Procedure C]

When spatial relation information (spatialRelationInfo) for SP-SRS or AP-SRS resources configured by an SRS resource information element (higher layer parameter SRS-Resource) is activated/updated for one set of CCs/BWPs by a MAC CE, then an applicable CC list is indicated by a simultaneous spatial update list (higher layer parameter simultaneousSpatial-UpdateList-r16 or simultaneousSpatial-UpdateListSecond-r16), and in all BWPs in an indicated CC, the spatial relation information is applied to the SP-SRS or AP-SRS resources having the same SRS resource ID. Only if a plurality of different values of CORESET pool indices (CORESETPoolIndex) in a CORESET information element (ControlResourceSet) are not provided for the UE, and at least one TCI code point mapped to two TCI states is not provided for the UE, spatial relation information (spatialRelationInfo) for SP-SRS or AP-SRS resources configured by an SRS resource information element (higher layer parameter SRS-Resource) is activated/updated for one set of CCs/BWPs by a MAC CE.

The simultaneous TCI cell list (simultaneousTCI-CellList) and simultaneous TCI update list (at least one of simultaneousTCI-UpdateList1-r16 and simultaneousTCI-UpdateList2-r16) are lists of serving cells in which TCI relations can be simultaneously updated by using the MAC CE. simultaneousTCI-UpdateList1-r16 and simultaneousTCI-UpdateList2-r16 do not include the same serving cell.

The simultaneous spatial update list (at least one of higher layer parameters simultaneousSpatial-UpdatedList1-r16 and simultaneousSpatial-UpdatedList2-r16) is a list of serving cells in which spatial relations can be simultaneously updated by using the MAC CE. simultaneousSpatial-UpdatedList1-r16 and simultaneousSpatial-UpdatedList2-r16 do not include the same serving cell.

Here, the simultaneous TCI update list and the simultaneous spatial update list are configured by the RRC, the CORESET pool indices of the CORESET are configured by the RRC, and the TCI code point mapped to the TCI states is indicated by the MAC CE.

### (Unified/Common TCI Framework)

According to a unified TCI framework, UL and DL channels can be controlled by a common framework. Instead of defining a TCI state or a spatial relation for each channel in a manner similar to that of Rel. 15, the unified TCI framework may indicate a common beam (common TCI state) and apply the common beam to all UL and DL channels, or may apply a UL common beam to all UL channels and apply a DL common beam to all DL channels.

One common beam for both DL and UL or a DL common beam and a UL common beam (two common beams in total) are under study.

The UE may assume the same TCI state (joint TCI state, joint TCI pool, joint common TCI pool, joint TCI state set) for the UL and DL. The UE may assume different TCI states (separate TCI states, separate TCI pools, UL separate TCI pool and DL separate TCI pool, separate common TCI pools, UL common TCI pool and DL common TCI pool) for the respective UL and DL.

Default beams for the UL and DL may be unified by MAC CE-based beam management (MAC CE-level beam indication). The default beams may be unified with a default UL beam (spatial relation) by updating a default TCI state for a PDSCH.

A common beam/unified TCI state from the same TCI pool (joint common TCI pool, joint TCI pool, set) for both of the UL and DL may be indicated by DCI-based beam management (DCI-level beam indication). X (> 1) TCI states may be activated by the MAC CE. UL/DL DCI may select one TCI state from X active TCI states. The selected TCI state may be applied to channels/RSs for both of the UL and DL.

The TCI pool (set) may be a plurality of TCI states configured by an RRC parameter, or may be a plurality of TCI states (active TCI states, active TCI pools, sets) activated by the MAC CE, out of a plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥ 1) of TCI states (UL TCI states) applied to a UL channel/RS and the number M (≥ 1) of TCI states (DL TCI states) applied to a DL channel/RS may be defined. At least one of N and M may be notified/configured/indicated for the UE via higher layer signaling/physical layer signaling.

In the present disclosure, description "N = M = X (X is an arbitrary integer)" may mean that X TCI states (joint TCI states) (corresponding to X TRPs) common to the UL and DL are notified/configured/indicated for the UE. Also, description "N = X (X is an arbitrary integer), M = Y (Y is an arbitrary integer, Y may be equal to X)" may mean that respective X UL TCI states (corresponding to X TRPs) and Y DL TCI states (corresponding to Y TRPs) (that is, separate TCI states) are notified/configured/indicated for the UE.

For example, description "N = M = 1" may mean that one TCI state common to the UL and DL is notified/configured/indicated for the UE, the TCI state being for a single TRP (joint TCI state for a single TRP).

For example, description "N = 1, M = 1" may mean that one UL TCI state and one DL TCI state for a single TRP are separately notified/configured/indicated for the UE (separate TCI state for a single TRP).

For example, description "N = M = 2" may mean that a plurality of (two) TCI states common to the UL and DL are notified/configured/indicated for the UE, the plurality of TCI states being for a plurality of (two) TRPs (joint TCI states for multiple TRPs).

For example, description "N = 2, M = 2" may mean that a plurality of (two) UL TCI states and a plurality of (two) DL TCI states for a plurality of (two) TRPs are notified/configured/indicated for the UE (separate TCI states for multiple TRPs).

Note that in the above-described examples, cases where values of N and M are 1 or 2 are described, but the values of N and M may be 3 or more, and N and M may be different from each other.

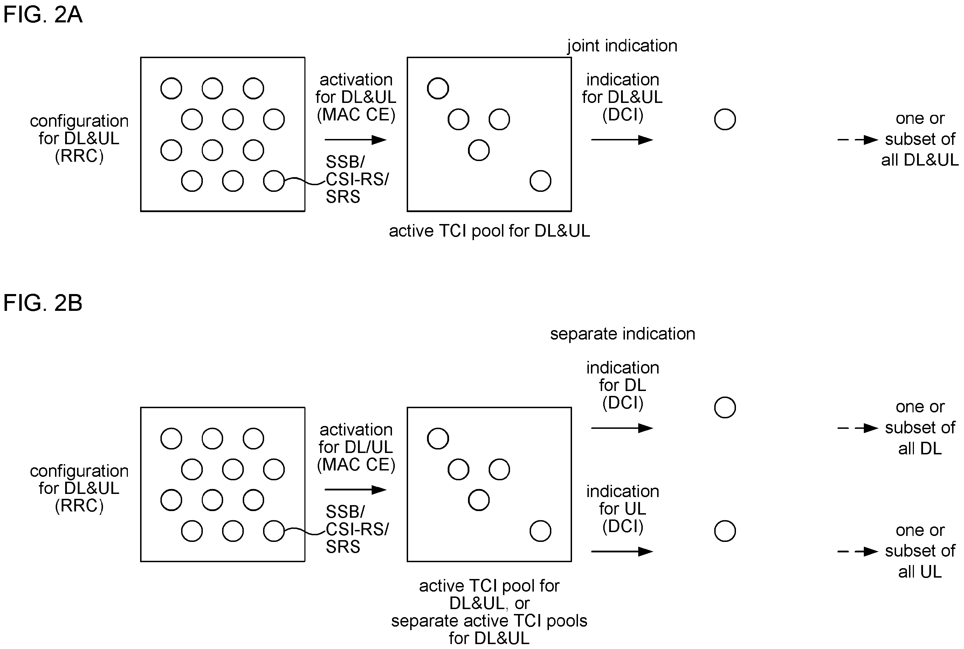

In an example of FIG. 2A, the RRC parameter (information element) configures a plurality of TCI states for both of the DL and UL. The MAC CE may activate a plurality of TCI states out of the plurality of configured TCI states. DCI may indicate one of the plurality of activated TCI states. The DCI may be UL/DL DCI. The indicated TCI state may be applied to at least one (or all) of UL/DL channels/RSs. One piece of DCI may indicate both a UL TCI and a DL TCI.

In the example of FIG. 2A, one dot may be one TCI state applied to both of the UL and DL, or may be two TCI states applied to the respective UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that in the present disclosure, a higher layer parameter (RRC parameter) to configure a plurality of TCI states may be referred to as configuration information to configure a plurality of TCI states, or may be simply referred to as "configuration information." In the present disclosure, a case that one of a plurality of TCI states is indicated by using DCI may be reception of indication information to indicate one of a plurality of TCI states included in the DCI, or may simply be reception of "indication information."

In an example of FIG. 2B, the RRC parameter configures a plurality of TCI states (joint common TCI pool) for both of the DL and UL. The MAC CE may activate a plurality of TCI states (active TCI pool) out of the plurality of configured TCI states. An (separate) active TCI pool for each of the UL and DL may be configured/activated.

DL DCI or a new DCI format may select (indicate) one or more (for example, one) TCI states. The selected TCI states may be applied to one or more (or all) DL channels/RSs. The DL channel may be a PDCCH/PDSCH/CSI-RS. The UE may determine a TCI state for each DL channel/RS by using TCI state operation (TCI framework) in Rel. 16. UL DCI or a new DCI format may select (indicate) one or more (for example, one) TCI states. The selected TCI states may be applied to one or more (or all) UL channels/RSs. The UL channel may be a PUSCH/SRS/PUCCH. Thus, different pieces of DCI may separately indicate the UL TCI and the DL DCI.

Existing DCI format 1_1/1_2 may be used for indication of the common TCI state.

A common TCI framework may have separate TCI states for the DL and UL.

A common TCI framework may have separate TCI states for the DL and UL. It is not preferable that a common UL-only TCI state is indicated by using DCI format 1_1/1_2.

### (Unified TCI Framework in Carrier Aggregation (CA))

For Rel-17 (or later versions) NR, introduction of a unified TCI state framework in CA is under study. It is expected that the common TCI state indicated for the UE is common among CCs (cells) (QCL type D among at least CCs). This is due to a case that simultaneous reception of different DL channels/RSs of QCL type D and simultaneous transmission of UL channels/RSs with different spatial relations are not supported by existing specifications (Rel. 15/16) except in a case of transmission/reception using multiple TRPs or the like.

However, when beam indication is performed by using an individual MAC CE/DCI for each CC, there is concern about an increase in signaling overhead.

For the unified TCI framework, update/activation of a common TCI state ID performed in order to provide common QCL information/common UL transmission spatial filter across a set of a plurality of configured CCs is under study.

As a TCI state pool for the CA, option 1 and option 2 below are under study.

### [Option 1]

A single TCI state pool configured by RRC may be shared (configured) with a set of a plurality of configured CCs (cells)/BWPs. For example, a cell group TCI state may be defined, or a TCI state pool for PDSCHs in reference cells may be reused. A CC (cell) ID for a QCL type A RS may be absent in a TCI state, and the CC (cell) ID for the QCL type A RS may be determined in accordance with a target CC (cell) with the TCI state.

In option 1, a common TCI state pool is configured for each plurality of CCs/BWPs, and thus when one common TCI state is indicated by using a MAC CE/DCI, the indicated common TCI state may be applied to all CCs/BWPs (all CCs/BWPs included in a pre-configured CC/BWP list).

### [Option 2]

A TCI state pool may be configured by the RRC for each individual CC.

In option 2, when an applied CC/BWP list for simultaneous beam update is pre-configured by using RRC, and beam update is performed by using a MAC CE/DCI in any CC/BWP included in the CC/BWP list, in a manner similar to that of Rel. 16, the update may be applied to all CCs/BWPs.

In option 1, a common TCI state pool is configured (shared) by the RRC for the plurality of CCs, a TCI state in the common TCI state pool is indicated by the common TCI state ID, and one RS determined on the basis of the TCI state is used for indicating a QCL type D RS across the set of the plurality of configured CCs/BWPs (constraint 1).

In option 2, an individual common TCI state pool is configured by the RRC for each CC, a TCI state in the common TCI state pool is indicated by the common TCI state ID, and one RS determined on the basis of the TCI state is used for indicating a QCL type D RS across the set of the plurality of configured CCs/BWPs (constraint 2).

### (Constraints on QCL Configuration)

As mentioned above, a case that beams for multiple types of channels are controlled by common beam indication/activation (MAC CE/DCI) in accordance with a common TCI framework is under study, but this control is performed for one BWP/CC (cell).

Simultaneous beam update across a plurality of CCs specified in specifications for Rel. 16 can update beams for a plurality of BWPs/CCs by using one MAC CE-based beam indication, and thus overhead of beam control can be reduced.

In Rel. 15/16, a QCL source RS (type A RS and type D RS) configured with a TCI state for a PDCCH DMRS/PDSCH DMRS is limited to cases of (case 1) to (case 3) below:
(Case 1) The type A RS is a tracking reference signal (TRS) (CSI-RS for which a higher layer parameter "trs-Info" is configured), and the type D RS is a CSI-RS equal to the type A RS.
(Case 2) The type A RS is the TRS, and the type D RS is a CSI-RS for which a higher layer parameter "repetition" is configured.
(Case 3) The type A RS is a CSI-RS for which the higher layer parameter "trs-Info" is not configured and for which the higher layer parameter "repetition" is not configured, and the type D RS is a CSI-RS equal to the type A RS.

Thus, a case where the type A RS and the type D RS become different CSI-RS resources is only a case of (case 2) described above.

The CSI-RS for which the higher layer parameter "repetition" is configured can be configured in order to support receive beam determination by the UE. However, the receive beam determination by the UE can be performed without using the CSI-RS for which the higher layer parameter "repetition" is configured.

On the other hand, the network (NW, for example, a base station) transmits a TRS as the type A RS, and thus it is conceivable that management of a case of (case 1) described above in which the type A RS is used as the type D RS is typical.

It is preferable that the simultaneous beam update across the plurality of CCs is also possible in the common TCI framework. However, there are constraints on configuration of QCL between the PDCCH DMRS/PDSCH DMRS and the TRS in the plurality of CCs as follows. Note that in the present disclosure, the constraints on the QCL configuration may be referred to as QCL configuration constraints, QCL constraints, a QCL chain, or the like.

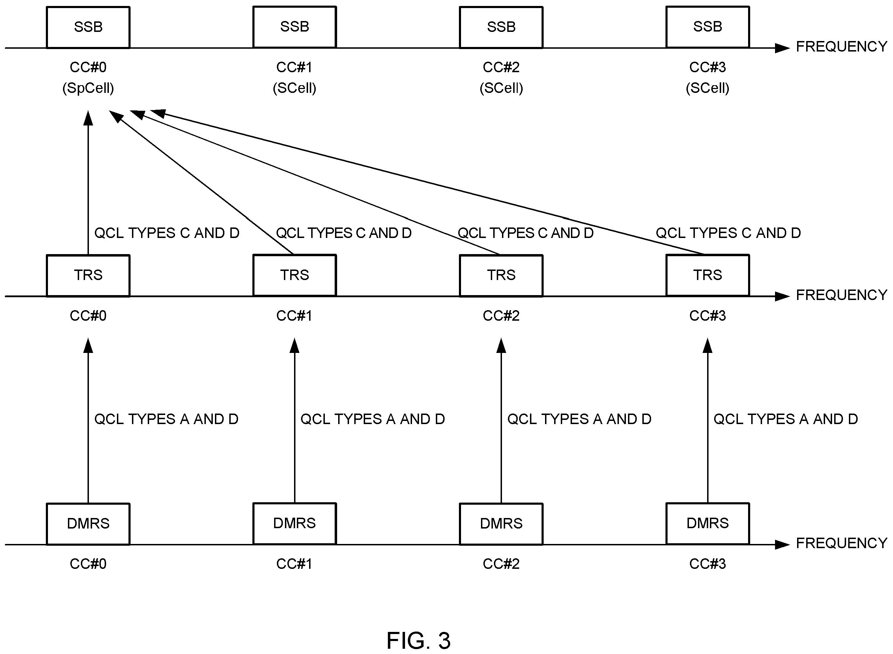

For example, such configuration as shown in FIG. 3 is possible in Rel. 15/16. Assume that CC #0 being a special cell (SpCell) (primary cell (PCell) or primary secondary cell (PSCell)) and CC #1, CC #2, and CC #3 being SCells are configured, and that an SSB, a TRS, and a PDCCH DMRS/PDSCH DMRS (which may be simply referred to as a DMRS) are transmitted in each CC. In this case, a TRS of each CC is in relationships of QCL types C and D with an SSB of CC #0, and a PDCCH of each CC is in relationships of QCL types A and D with a TRS of the same CC.

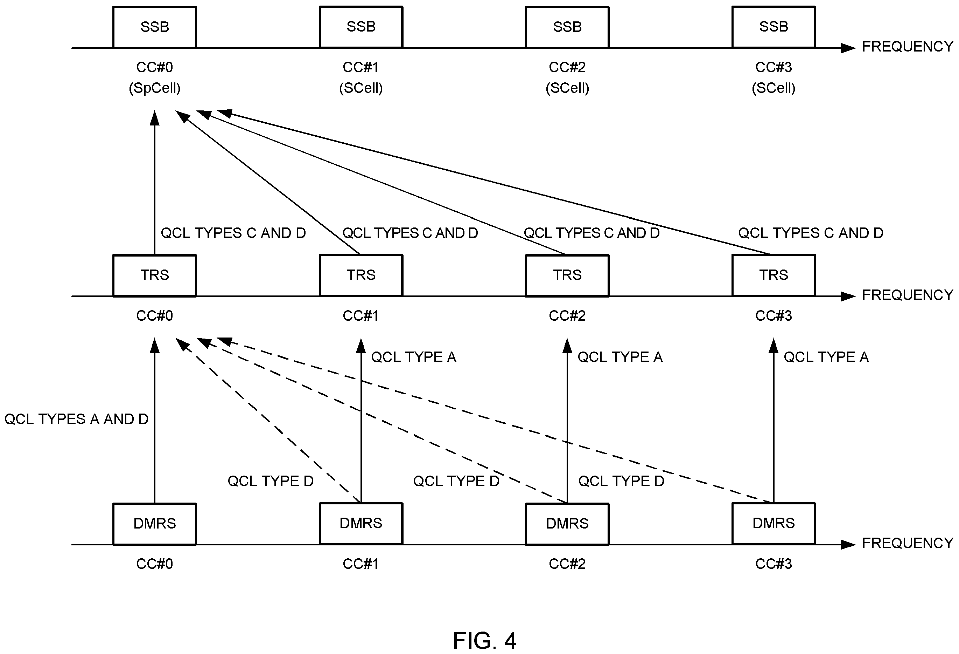

For example, such configuration as shown in FIG. 4 is impractical in Rel. 15/16. Similarly to FIG. 3 mentioned above, when the TRS of each CC is in the relationships of QCL types C and D with the SSB of CC #0, and the DMRS of each CC is in the relationship of QCL type A with the TRS of the same CC, DMRSs of CC #1, CC #2, and CC #3 fail to be in the relationship of QCL type D with a TRS of CC #0 (described by using dashed lines). When a TCI state for the PDCCH DMRS/PDSCH DMRS is a TRS, a QCL type A RS and a QCL type D RS need to be the same TRS.

When a TRS is configured as a QCL type A/D RS in a TCI state on a certain CC, a TRS of another CC fails to be configured as the QCL type A/D RS. Thus, also in a case where a common TCI pool or a common TCI is configured/updated/indicated between the plurality of CCs, TCI state (TCI state including the QCL type A/D RS) configuration will be performed for each CC.

When a CSI-RS is configured as a QCL type D RS in a TCI state on a certain CC, there is a case where a CSI-RS of another CC is configurable as the QCL type D RS in a TCI state for a PDCCH/PDSCH on the certain CC. Also in this case, it is necessary that a CSI-RS/TRS of the same CC is configured as a QCL type A RS in the TCI state. The QCL type A RS indicates that parameters for determining channel property, such as delay spreads and average delays, are the same, and thus this is caused by a possibility that values of these parameters are different from each other in different CCs.

A cell with the QCL type A RS is required to be the same as a cell with a PDSCH/PDCCH DMRS for which a TCI state is configured.

As mentioned above, when a QCL type D RS is a TRS, the QCL type D RS is required to be the same as the QCL type A RS. Combining the above description, when a QCL type D RS is a TRS, a cell with the QCL type D RS is required to be the same as a cell with a PDSCH/PDCCH DMRS for which a TCI state is configured.

When a QCL type D RS is a CSI-RS for which repetition is configured (the QCL type D RS has a CSI-RS resource in an NZP CSI-RS resource set for which a higher layer parameter "repetition" is configured (higher layer parameter "repetition" is ON), a cell with the QCL type D RS may be different from a cell with a PDSCH/PDCCH DMRS for which a TCI state is configured.

For Rel. 17 (or later versions), a case that in a common TCI state framework in CA, a QCL constraint different from QCL constraints defined in Rel. 16 (or earlier versions) mentioned above is introduced to a constraint on QCL configuration with a common TCI state across a set of a plurality of CCs (a plurality of CCs associated with beams from the same base station) is under study. In the present disclosure, the QCL constraints defined in Rel. 16 (or earlier versions) may be referred to as a first QCL constraint. Also, the QCL constraint different from the QCL constraints defined in Rel. 16 (or earlier versions) may be referred to as a second QCL constraint.

With respect to a QCL source RS with a common TCI state, in addition to a higher layer parameter (for example, qcl_Type1) related to a first QCL type (for example, QCL type A) RS, a higher layer parameter (for example, qcl_Type2) related to a second QCL type (for example, QCL type D) may be configured for the UE.

In the common TCI state, the first QCL type RS and the second QCL type RS may be different from each other. For example, the UE may assume that a QCL type A RS and a QCL type D RS are configured to be different from each other.

When the first QCL type RS and the second QCL type RS are different from each other in the common TCI state, a case where the first QCL type RS becomes a TRS, and where the second QCL type RS becomes a CSI-RS (having a higher layer parameter "repetition") for which repetition is configured may be excluded.

The first QCL type RS and the second QCL type RS may be RSs in different CCs included in a common CC list. Note that the first QCL type RS and the second QCL type RS may be RSs with identical RS IDs or RSs with identical TCI IDs in different CCs included in a common CC list. The first QCL type RS and the second QCL type RS may be RSs included in a common RS list/common TCI state list. According to these, it is possible to appropriately configure/indicate a QCL type D RS with less control overhead without a NW transmitting an additional CSI-RS resource (for example, a CSI-RS for which repetition is configured).

The second QCL constraint that has been studied for introduction to Rel. 17 (or later versions) and that is configurable for the UE will be described below. The UE may assume that a QCL source RS (QCL type A RS and QCL type D RS) configured with a TCI state for a PDCCH DMRS/PDSCH DMRS follows (case 4) and (case 5) below in addition to/in place of the cases of (case 1) to (case 3) mentioned above:
(Case 4) The first QCL type RS is a TRS (CSI-RS for which a higher layer parameter "trs-Info" is configured), and the second QCL type RS is a TRS (CSI-RS for which the higher layer parameter "trs-Info" is configured).
(Case 5) The first QCL type RS is a TRS (CSI-RS for which the higher layer parameter "trs-Info" is configured), and the second QCL type RS is an SSB.

Note that second QCL type source RSs with the TCI state for the PDCCH DMRS/PDSCH DMRS in respective CCs may be required to be identical RSs between CCs.

### (Case 4)

In case 4, the first QCL type RS and the second QCL type RS may be different CSI-RS resources.

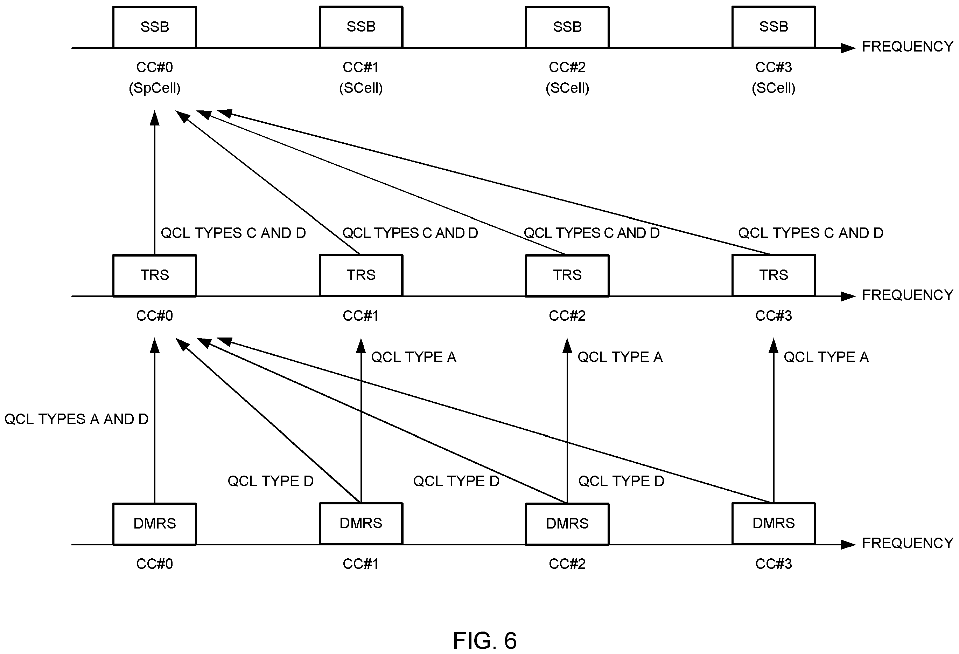

FIG. 6 is a diagram to show an example of the QCL constraint in case 4. In the example shown in FIG. 6, a TRS of each CC is in relationships of QCL types C and D with an SSB of CC #0. A DMRS of each CC (PDCCH DMRS/PDSCH DMRS) is in a relationship of QCL type A with a TRS of the same CC. In this case, the DMRS of each CC may be in a relationship of QCL type D with a TRS of CC #0.

### (Case 5)

For the first QCL type RS, using a TRS can make resource density higher and allows time/frequency correction to be performed more accurately as compared to an SSB, and thus the TRS is configured for time/frequency tracking. On the other hand, the second QCL type RS is used for obtaining a UL/DL (transmission/reception) spatial domain filter, and is also operable in resource density of the SSB.

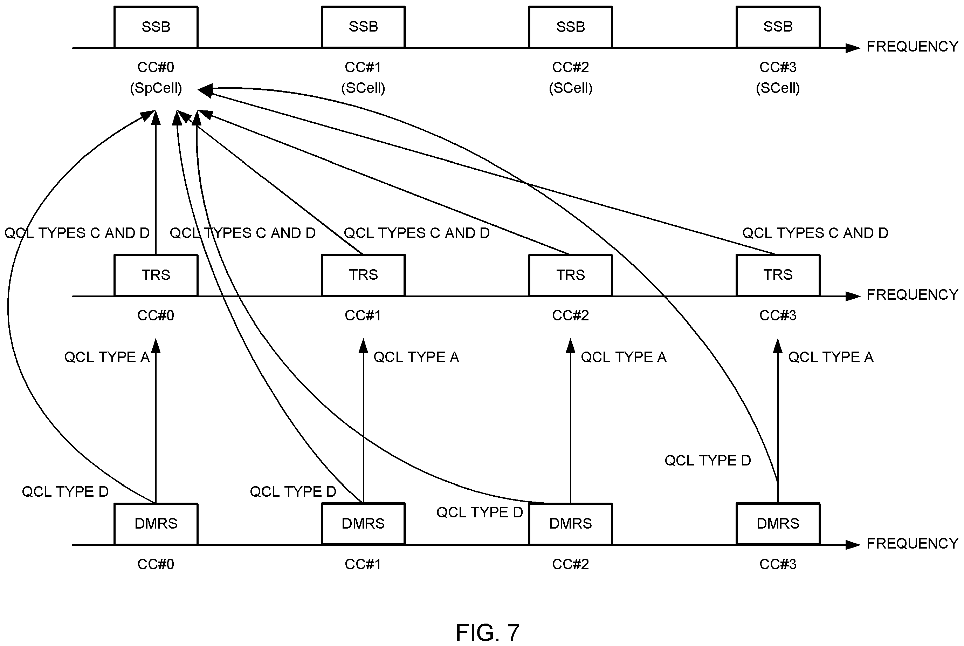

FIG. 7 is a diagram to show an example of the QCL constraint in case 5. In the example shown in FIG. 7, a TRS of each CC is in relationships of QCL types C and D with an SSB of CC #0. A DMRS of each CC (PDCCH DMRS/PDSCH DMRS) is in a relationship of QCL type A with a TRS of the same CC. In this case, the DMRS of each CC may be in a relationship of QCL type D with an SSB of CC #0.

For a common TCI state framework in CA in Rel. 17 (or later versions), a case that a constraint on QCL configuration with a common TCI state across a set of a plurality of CCs (a plurality of CCs associated with beams from the same base station) is at least one of option 1 and option 2 (option 2-1 to option 2-3) below is under study;
[Option 1]: A separate QCL type D RS for each CC of the plurality of CCs is determined on the basis of one or more common TCI states, and the determined QCL type D RS for each CC is associated with the same QCL type D RS (that is, case 1 to case 3 mentioned above).
[Option 2]: A single QCL type D RS for each CC of the plurality of CCs is determined on the basis of one or more common TCI states, and a QCL constraint according to at least one of option 2-1 to option 2-3 below is followed;
[[Option 2-1]]: Case 4 mentioned above;
[[Option 2-2]]: Case 5 mentioned above; and
[[Option 2-3]]: Case 4 and case 5 mentioned above.

### (Radio Link Monitoring (RLM))

In NR, radio link monitoring (RLM) is used.

In NR, a base station may configure, for the UE, a radio link monitoring reference signal (Radio Link Monitoring RS (RLM-RS)) for each of BWPs by using higher layer signaling. The UE may receive configuration information for RLM (for example, an information element "RadioLinkMonitoringConfig" of RRC).

The configuration information for RLM may include failure detection resource configuration information (for example, a higher layer parameter "failureDetectionResourcesToAddModList"). The failure detection resource configuration information may include a parameter related to the RLM-RS (for example, a higher layer parameter "RadioLinkMonitoringRS") .

The parameter related to the RLM-RS may include information indicating that the parameter corresponds to the purpose of RLM, an index corresponding to a resource of the RLM-RS (for example, an index included in a higher layer parameter "failureDetectionResources" (RadioLinkMonitoringRS in failureDetectionResourcesToAddModList)), and the like. For example, the index may be a CSI-RS resource configuration index (for example, a non-zero power CSI-RS resource ID), or may be an SS/PBCH block index (SSB index). The information about the purpose may indicate beam failure, (cell level) Radio Link Failure (RLF), or both of them.

The UE may identify an RLM-RS resource on the basis of the index corresponding to the resource of the RLM-RS, and may perform RLM by using the RLM-RS resource.

In RLM procedure in Rel. 16, the UE follows implicit RLM-RS determination procedure below.

### [Implicit RLM-RS Determination Procedure]

If the RLM-RS (RadioLinkMonitoringRS) is not provided for the UE, and a TCI state including one or more CSI-RSs for PDCCH reception is provided for the UE, the UE follows procedure 1 to procedure 4 below.

### [[Procedure 1]]

If an active TCI state for the PDCCH reception includes only one RS, the UE uses, for RLM, the RS provided for the active TCI state for the PDCCH reception.

### [[Procedure 2]]

If the active TCI state for the PDCCH reception includes two RSs, the UE assumes that one RS has QCL type D, and the UE uses, for RLM, the RS having QCL type D. The UE does not assume that both of the RSs have QCL type D.

### [[Procedure 3]]

The UE is not required to use an aperiodic or semi-persistent RS for RLM.

### [[Procedure 4]]

For Lₘₐₓ = 4, the UE selects, in order starting from the lowest monitoring periodicity, N_{RLM} RSs provided for an active TCI state for PDCCH reception in a plurality of CORESETs associated with a plurality of search space sets. If more than one CORESET is associated with a plurality of search space sets having the same monitoring periodicity, the UE determines a CORESET order starting from the highest CORESET index.

Here, Lₘₐₓ is a maximum number of SS/PBCH block indices in a cell. A maximum number of SS/PBCH blocks transmitted in a half-frame is Lₘₐₓ.

Thus, when the RLM-RS is not provided for the UE, the UE performs implicit RLM-RS determination, and uses, for RLM, an active TCI state for PDCCH reception. When Lₘₐₓ = 4, the UE selects N_{RLM} RSs firstly in ascending order of monitoring periodicities of the search space sets, and subsequently in descending order of CORESET indices. The UE selects a CORESET.

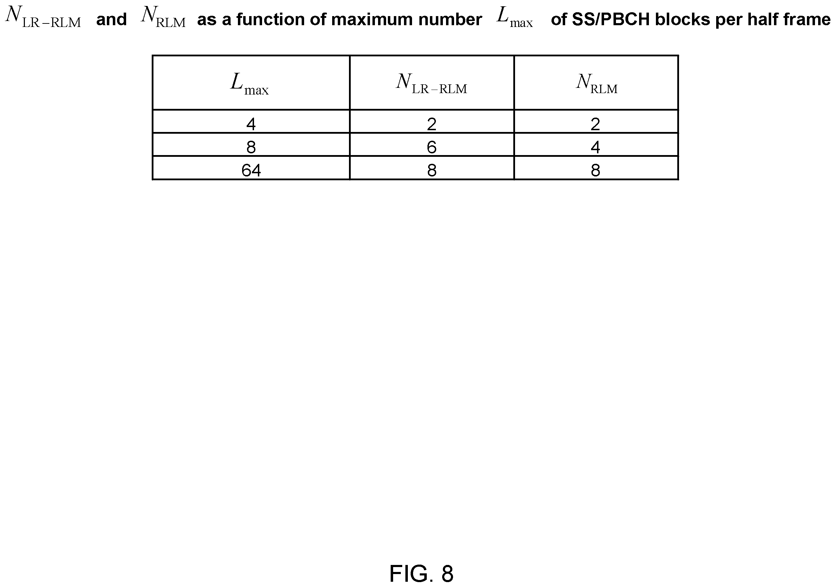

Up to N_{LR-RLM} RLM-RSs for link recovery procedure and RLM can be configured for the UE. Up to N_{RLM} RLM-RSs out of N_{LR-RLM} RLM-RSs are used for the RLM depending on Lₘₐₓ. In Rel. 16, as shown in FIG. 8, N_{RLM} = 2 when Lₘₐₓ = 4, N_{RLM} = 4 when Lₘₐₓ = 8, and N_{RLM} = 8 when Lₘₐₓ = 64.

### (Beam Failure Detection (BFD)/Beam Failure Recovery (BFR))

In NR, communication is performed by using beam forming. For example, a UE and a base station (for example, gNB (gNodeB)) may use a beam used for signal transmission (also referred to as a transmit beam, Tx beam, or the like) and a beam used for signal reception (also referred to as a receive beam, Rx beam, or the like).

Using the beam forming is susceptible to interference from an obstruction, and thus it is assumed that radio link quality deteriorates. Due to deterioration of the radio link quality, radio link failure (RLF) may occur frequently. Occurrence of the RLF requires reconnection of a cell, and thus frequent occurrence of the RLF causes deterioration of system throughput.

In NR, in order to suppress occurrence of the RLF, when quality of a specific beam deteriorates, procedure for switching to another beam (which may be referred to as beam recovery (BR), beam failure recovery (BFR), L1/L2 (Layer 1/Layer 2) beam recovery, or the like) is performed. Note that the BFR procedure may be simply referred to as BFR.

Note that beam failure (BF) in the present disclosure may be referred to as link failure.

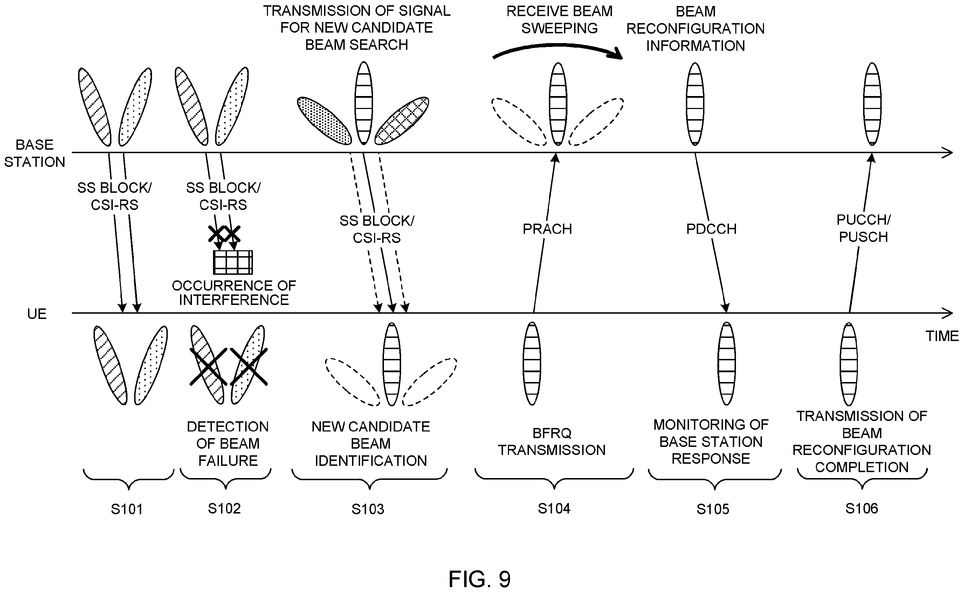

FIG. 9 is a diagram to show an example of the beam recovery procedure in Rel-15 NR. The number of beams and the like are just examples, and are not limited to this. In an initial state (step S101), the UE performs measurement based on a reference signal (RS) resource transmitted by using two beams.

The RS may be at least one of a synchronization signal block (SSB) and an RS for channel state measurement (Channel State Information RS (CSI-RS)). Note that the SSB may be referred to as an SS/PBCH (Physical Broadcast Channel) block or the like.

The RS may be at least one of a primary synchronization signal (Primary SS (PSS)), a secondary synchronization signal (Secondary SS (SSS)), a mobility reference signal (Mobility RS (MRS)), a signal included in the SSB, the SSB, the CSI-RS, a demodulation reference signal (DMRS), a beam-specific signal, and the like, or may be a signal constituted by expanding, changing, or the like these signals. The RS measured at step S101 may be referred to as an RS for beam failure detection (Beam Failure Detection RS (BFD-RS)), an RS used for beam recovery procedure (BFR-RS), or the like.

At step S102, due to interference of a radio wave from the base station, the UE fails to detect the BFD-RS (or quality of reception of the RS deteriorates). Such interference may occur due to, for example, influence of an obstruction, fading, interference, and the like between the UE and the base station.

The UE detects beam failure when a certain condition is satisfied. For example, the UE may detect occurrence of the beam failure when a BLER (Block Error Rate) for all of configured BFD-RSs (BFD-RS resource configurations) is less than a threshold value. When occurrence of the beam failure is detected, a lower layer (physical (PHY) layer) of the UE may notify (indicate) a beam failure instance for a higher layer (MAC layer).

Note that judgment standards (criteria) are not limited to the BLER, and may be reference signal received power in the physical layer (Layer 1 Reference Signal Received Power (L1-RSRP)). In place of the RS measurement or in addition to the RS measurement, beam failure detection may be performed on the basis of a downlink control channel (Physical Downlink Control Channel (PDCCH)) or the like. The BFD-RS may be expected to be quasi-co-location (QCL) with a DMRS for a PDCCH monitored by the UE.

Here, QCL is an indicator indicating statistical properties of the channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

Information related to the BFD-RS (for example, indices, resources, numbers, the number of ports, precoding, and the like for the RS), information related to the beam failure detection (BFD) (for example, the above-mentioned threshold value), and the like may be configured (notified) for the UE by using higher layer signaling or the like. The information related to the BFD-RS may be referred to as information related to a BFR resource or the like.

The higher layer (for example, the MAC layer) of the UE may start a certain timer (which may be referred to as a beam failure detection timer) when receiving beam failure instance notification from the PHY layer of the UE. The MAC layer of the UE may trigger BFR (for example, start any one of random access procedures mentioned below) when receiving the beam failure instance notification certain times (for example, beamFailureInstanceMaxCount configured by RRC) or more until the timer expires.

When there is no notification from the UE or when receiving a certain signal (beam recovery request at step S104) from the UE, the base station may judge that the UE has detected beam failure.

At step S103, for beam recovery, the UE starts a search for a new candidate beam for use in new communication. The UE may select, by measuring a certain RS, the new candidate beam corresponding to the RS. The RS measured at step S103 may be referred to as a new candidate RS, an RS for new candidate beam identification (New Candidate Beam Identification RS (NCBI-RS)), a CBI-RS, a CB-RS (Candidate Beam RS), or the like. The NCBI-RS may be the same as the BFD-RS, or may be different from the BFD-RS. Note that the new candidate beam may be simply referred to as a candidate beam or a candidate RS.

The UE may determine a beam corresponding to an RS satisfying a certain condition as the new candidate beam. For example, the UE may determine the new candidate beam on the basis of an RS with L1-RSRP exceeding a threshold value, out of configured NCBI-RSs. Note that judgment standards (criteria) are not limited to the L1-RSRP. The L1-RSRP related to an SSB may be referred to as SS-RSRP. The L1-RSRP related to a CSI-RS may be referred to as CSI-RSRP.

Information related to the NCBI-RS (for example, resources, numbers, the number of ports, precoding, and the like for the RS), information related to new candidate beam identification (NCBI) (for example, the above-mentioned threshold value), and the like may be configured (notified) for the UE by using higher layer signaling or the like. Information related to the new candidate RS (or the NCBI-RS) may be obtained on the basis of information related to the BFD-RS. The information related to the NCBI-RS may be referred to as information related to an NBCI resource or the like.

Note that the BFD-RS, the NCBI-RS, and the like may be interpreted as a radio link monitoring reference signal (Radio Link Monitoring RS (RLM-RS)) .

At step S104, the UE that has identified the new candidate beam transmits a beam recovery request (Beam Failure Recovery reQuest (BFRQ)). The beam recovery request may be referred to as a beam recovery request signal, a beam failure recovery request signal, or the like.

The BFRQ may be transmitted by using, for example, at least one of an uplink control channel (Physical Uplink Control Channel (PUCCH)), a random access channel (Physical Random Access Channel (PRACH)), an uplink shared channel (Physical Uplink Shared Channel (PUSCH)), and a configured grant (CG) PUSCH.

The BFRQ may include information about the new candidate beam/new candidate RS identified at step S103. A resource for the BFRQ may be associated with the new candidate beam. The information about the beam may be notified by using a beam index (BI), a port index of a certain reference signal, an RS index, a resource index (for example, a CSI-RS resource indicator (CRI)), an SSB resource indicator (SSBRI), or the like.

For Rel-15 NR, CB-BFR (Contention-Based BFR) that is BFR based on contention-based random access (RA) procedure and CF-BFR (Contention-Free BFR) that is BFR based on non-contention-based random access procedure are under study. In the CB-BFR and the CF-BFR, the UE may transmit a preamble (also referred to as an RA preamble, a random access channel (Physical Random Access Channel (PRACH)), a RACH preamble, or the like) as the BFRQ by using a PRACH resource.

In the CB-BFR, the UE may transmit a preamble randomly selected from one or a plurality of preambles. On the other hand, in the CF-BFR, the UE may transmit a preamble allocated from the base station in a UE-specific manner. In the CB-BFR, the base station may allocate an identical preamble to a plurality of UEs. In the CF-BFR, the base station may allocate a preamble in a UE-dedicated manner.

Note that the CB-BFR and the CF-BFR may be referred to as CB PRACH-based BFR (contention-based PRACH-based BFR (CBRA-BFR)) and CF PRACH-based BFR (contention-free PRACH-based BFR (CFRA-BFR)), respectively. The CBRA-BFR may be referred to as CBRA for BFR. The CFRA-BFR may be referred to as CFRA for BFR.

In both of the CB-BFR and the CF-BFR, information related to the PRACH resource (RA preamble) may be notified by using, for example, higher layer signaling (RRC signaling or the like). For example, the information may include information indicating correspondence between detected DL-RSs (beams) and PRACH resources, and a different PRACH resource may be associated with each DL-RS.

At step S105, the base station that has detected the BFRQ transmits a response signal (which may be referred to as gNB response or the like) in response to the BFRQ from the UE. The response signal may include reconfiguration information about one or a plurality of beams (for example, DL-RS resource configuration information).

The response signal may be transmitted in, for example, a UE-common search space of a PDCCH. The response signal may be notified by using a PDCCH (DCI) cyclic redundancy check (CRC)-scrambled by a UE identifier (for example, a cell-radio RNTI (C-RNTI)). The UE may judge, on the basis of beam reconfiguration information, at least one of a transmit beam and a receive beam to be used.

The UE may monitor the response signal on the basis of at least one of a control resource set (CORESET) for BFR and a search space set for BFR.

With respect to the CB-BFR, when the UE receives a PDCCH corresponding to a C-RNTI related to the UE itself, it may be judged that contention resolution has succeeded.

With respect to processing at step S105, a period for the UE to monitor response from the base station (for example, gNB) to the BFRQ may be configured. The period may be referred to as, for example, a gNB response window, a gNB window, a beam recovery request response window, or the like. The UE may perform retransmission of the BFRQ when there is no gNB response detected in the window period.

At step S106, the UE may transmit, to the base station, a message indicating that beam reconfiguration has been completed. For example, the message may be transmitted on a PUCCH, or may be transmitted on a PUSCH.

Beam recovery success (BR success) may represent, for example, a case where step S106 has been reached. On the other hand, beam recovery failure (BR failure) may correspond to, for example, a case that BFRQ transmission has reached a certain number of times or a case that a beam failure recovery timer (Beam-failure-recovery-Timer) has expired.

In Rel. 15, a case that beam recovery procedure (for example, BFRQ notification) for beam failure detected in an SpCell (PCell/PSCell) is performed by using random access procedure is supported. On the other hand, in Rel. 16, a case that beam recovery procedure (for example, BFRQ notification) for beam failure detected in an SCell is performed by using at least one of PUCCH (for example, scheduling request (SR)) transmission for BFR and MAC CE (for example, UL-SCH) transmission for BFR is supported.

For example, the UE may transmit information related to beam failure by using two MAC CE-based steps. The information related to the beam failure may include information related to a cell in which the beam failure has been detected and information related to a new candidate beam (or a new candidate RS index).

### [Step 1]

When BF has been detected, a PUCCH-BFR (scheduling request (SR)) may be transmitted from the UE to the PCell/PSCell. Subsequently, a UL grant (DCI) for step 2 described below may be transmitted from the PCell/PSCell to the UE. In a case where beam failure has been detected, when a MAC CE (or a UL-SCH) for transmitting information related to a new candidate beam is present, step 1 (for example, PUCCH transmission) may be omitted to perform step 2 (for example, MAC CE transmission).

### [Step 2]

Subsequently, the UE may transmit, to the base station (PCell/PSCell), information (for example, cell index) related to a (unsuccessful) cell in which the beam failure has been detected and the information related to the new candidate beam by using the MAC CE via an uplink channel (for example, a PUSCH). After that, after BFR procedure, QCL of a PDCCH/PUCCH/PDSCH/PUSCH may be updated to a new beam after a certain period (for example, 28 symbols) from reception of a response signal from the base station.

Note that these step numbers are just numbers for description, and a plurality of steps may be combined with each other, or the order of the steps may be changed. Whether to perform the BFR may be configured for the UE by using higher layer signaling.

### (BFD-RS)

In Rel. 16, for each of BWPs of one serving cell, set q0 bar of periodic (P)-CSI-RS resource configuration indices and set q1 bar of at least one of P-CSI-RS resource configuration indices and SS/PBCH block indices can be provided for the UE by failure detection resources (failureDetectionResources, failureDetectionResourcesToAddModList, RadioLinkMonitoringConfig) and a candidate beam RS list (candidateBeamRSList), an extended candidate beam RS list (candidateBeamRSListExt-r16), or a candidate beam RS list for an SCell (candidateBeamRSSCellList-r16), respectively.

Here, qo bar is an expression in which an overline is added to "qo." Hereinafter, qo bar is simply expressed as qo. q₁ bar is an expression in which an overline is added to "qi." Hereinafter, q₁ bar is simply expressed as q₁.

Set qo of P-CSI-RS resources provided by the failure detection resources may be referred to as an explicit BFD-RS.

The UE may perform L1-RSRP measurement and the like by using RS resources corresponding to indices included in at least one set of set qo and set q₁ to detect beam failure.

Note that in the present disclosure, a case that the above-mentioned higher layer parameter indicating information about an index corresponding to a BFD resource is provided and each of a case that a BFD resource is configured, a case that a BFD-RS is configured, and the like may be interchangeably interpreted. In the present disclosure, the BFD resource, set qo of periodic CSI-RS resource configuration indices or SSB indices, a BFD-RS, a BFD-RS set, and an RS set may be interchangeably interpreted.

For one BWP of that serving cell, if qo is not provided for the UE by failure detection resources (failureDetectionResources), the UE determines, in accordance with implicit BFD-RS determination procedure below, an RS (set qo) to be used for BFD procedure.

### [Implicit BFD-RS Determination Procedure]

The UE determines that a P-CSI-RS resource configuration index having the same value as an RS index in an RS set indicated by a TCI state (TCI-State) for a corresponding CORESET used by the UE for PDCCH monitoring is included in set qo. If two RS indices are present in one TCI state, set qo includes an RS index having a QCL type D configuration for a corresponding TCI state. The UE assumes that set qo includes up to two RS indices. The UE assumes a single port RS in set qo.

This set qo may be referred to as an implicit BFD-RS.

Thus, the UE determines the BFD-RS (RS set) by using a TCI state for a PDCCH. The UE assumes that the RS set includes up to two RSs.

### (Analysis)

As mentioned above, in the unified TCI framework, a common/unified TCI state can be updated by DCI.

As mentioned above, based on Rel. 16, when an RLM/BFD RS is not configured, the RLM/BFD RS is implicitly derived on the basis of QCL of a CORESET (QCL type D RS when a plurality of (for example, two) TCI states are configured).

Typically, a monitoring RS for RLM/BFD (RLM/BFD RS) is determined/selected on an L2 or L3 level rather than L1 dynamic signaling.

In Rel. 15/16, update/switching of the RLM/BFD RS is not performed by the DCI, and only MAC CE-based update using the above-mentioned implicit method or RRC-based update using the above-mentioned implicit method or an explicit method can be performed.

For Rel. 17 (or later versions), a case that a monitoring RS for RLM/BFD (RLM/BFD RS) is at least one of a TCI state indicated by DCI and a TCI state activated by a MAC CE, and that one of the TCI states is applied to a CORESET by dynamic signaling is under study.

For Rel. 17 (or later versions), introduction of a MAC CE for explicit update of the RLM/BFD RS is also under study. In this case, it is conceivable that such implicit deriving of the RLM/BFD RS as mentioned above becomes unnecessary.

However, an RS used for RLM/BFD in a unified TCI framework in CA is indefinite. For example, when the above-mentioned implicit RLM-RS determination procedure is used, whether an RS used for RLM/BFD (RLM/BFD RS) can be configured/indicated/updated by using DCI is indefinite.

Unless the RS used for the RLM/BFD is definite, accuracy of the RLM/BFD may deteriorate, and communication quality, throughput, and the like may deteriorate.

Thus, the inventors of the present invention came up with the idea of a method for configuring/updating an RS used for RLM/BFD when a common TCI state is configured.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interchangeably interpreted. In the present disclosure, a cell, a serving cell, a CC, a carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, "support," "control," "controllable," "operate," and "operable" may be interchangeably interpreted.

In the present disclosure, configuration (configure), activation (activate), update, indication (indicate), enabling (enable), specification (specify), and selection (select) may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), and an RRC message may be interchangeably interpreted.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, a MAC CE and an activation/deactivation command may be interchangeably interpreted.

In the present disclosure, a pool, a set, a group, a list, and candidates may be interchangeably interpreted.

In the present disclosure, a DMRS, a DMRS port, and an antenna port may be interchangeably interpreted.

In the present disclosure, a special cell, an SpCell, a PCell, and a PSCell may be interchangeably interpreted.

In the present disclosure, a beam, a spatial domain filter, a spatial setting, a TCI state, a UL TCI state, a unified TCI state, a unified beam, a common TCI state, a common beam, TCI assumption, QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D in a TCI state/QCL assumption, an RS of QCL type A in a TCI state/QCL assumption, a spatial relation, a spatial domain transmission filter, a UE spatial domain transmission filter, a UE transmit beam, a UL beam, a UL transmit beam, UL precoding, a UL precoder, and a PL-RS may be interchangeably interpreted. In the present disclosure, a QCL type X-RS, a DL-RS associated with QCL type X, and a DL-RS, a DL-RS source, an SSB, a CSI-RS, or an SRS having QCL type X may be interchangeably interpreted.

In the present disclosure, a common beam, a common TCI, a common TCI state, a unified TCI, a unified TCI state, a TCI state applicable to DL and UL, a TCI state applied to a plurality (multiple types) of channels/RSs, a TCI state applicable to multiple types of channels/RSs, and a PL-RS may be interchangeably interpreted.

In the present disclosure, a plurality of TCI states configured by RRC, a plurality of TCI states activated by a MAC CE, a pool, a TCI state pool, an active TCI state pool, a common TCI state pool, a joint TCI state pool, a separate TCI state pool, a UL common TCI state pool, a DL common TCI state pool, a common TCI state pool configured/activated by RRC/MAC CE, and TCI state information may be interchangeably interpreted.

In the present disclosure, a CC list, a serving cell list, a CC list in cell group configuration (CellGroupConfig), an applicable list, a simultaneous TCI update list/second simultaneous TCI update list, simultaneousTCI-UpdateList1-r16/simultaneousTCI-UpdateList2-r16, a simultaneous TCI cell list, simultaneousTCI-CellList, a simultaneous spatial update list/second simultaneous spatial update list, simultaneousSpatial-UpdatedList1-r16/simultaneousSpatial-UpdatedList2-r16, a configured CC, a configured list, a BWP/CC in a configured list, all BWPs/CCs in a configured list, a CC indicated by an activation command, an indicated CC, a CC on which a MAC CE has been received, and information indicating a plurality of cells for an update of at least one of a TCI state and a spatial relation may be interchangeably interpreted.

In the present disclosure, "TCI state A is of the same QCL type D as that of TCI state B," "TCI state A and TCI state B are the same," "TCI state A is QCL type D with TCI state B," and the like may be interchangeably interpreted.

In the present disclosure, a CSI-RS, an NZP-CSI-RS, a periodic (P)-CSI-RS, a P-TRS, a semi-persistent (SP)-CSI-RS, an aperiodic (A)-CSI-RS, a TRS, a CSI-RS for tracking, a CSI-RS having TRS information (higher layer parameter "trs-Info"), an NZP CSI-RS resource in an NZP CSI-RS resource set having TRS information, an NZP-CSI-RS resource in an NZP-CSI-RS resource set constituted by a plurality of NZP-CSI-RS resources for the same antenna port, and a TRS resource may be interchangeably interpreted. In the present disclosure, a CSI-RS resource, a CSI-RS resource set, a CSI-RS resource group, and an information element (IE) may be interchangeably interpreted.

In the present disclosure, a panel, an Uplink (UL) transmission entity, a TRP, a spatial relation, a control resource set (COntrol REsource SET (CORESET)), a PDSCH, a codeword, a base station, an antenna port for a certain signal (for example, a demodulation reference signal (DMRS) port), an antenna port group for a certain signal (for example, a DMRS port group), a group for multiplexing (for example, a code division multiplexing (CDM) group, a reference signal group, or a CORESET group), a CORESET pool, a CORESET subset, a CW, a redundancy version (RV), and a layer (MIMO layer, transmission layer, spatial layer) may be interchangeably interpreted. A panel Identifier (ID) and a panel may be interchangeably interpreted. In the present disclosure, a TRP ID, a TRP-related ID, a CORESET pool index, a location of one TCI state out of two TCI states corresponding to one code point of a field in DCI (ordinal number, first TCI state or second TCI state), and a TRP may be interchangeably interpreted.

In the present disclosure, a TRP, a transmission point, a panel, a DMRS port group, a CORESET pool, and one of two TCI states associated with one code point of a TCI field may be interchangeably interpreted.

In the present disclosure, a single TRP, a single TRP system, single TRP transmission, and a single PDSCH may be interchangeably interpreted. In the present disclosure, multiple TRPs, a multi-TRP system, multi-TRP transmission, and multiple PDSCHs may be interchangeably interpreted. In the present disclosure, single DCI, a single PDCCH, multiple TRPs based on single DCI, and activation of two TCI states on at least one TCI code point may be interchangeably interpreted.

In the present disclosure, a single TRP, a channel using a single TRP, a channel using one TCI state/spatial relation, a case that multiple TRPs are not enabled by RRC/DCI, a case that a plurality of TCI states/spatial relations are not enabled by RRC/DCI, and a case that a CORESET pool index (CORESETPoolIndex) value with 1 is not configured for any CORESET, and any code point of a TCI field is not mapped to two TCI states may be interchangeably interpreted.

In the present disclosure, multiple TRPs, a channel using multiple TRPs, a channel using a plurality of TCI states/spatial relations, a case that multiple TRPs are enabled by RRC/DCI, a case that a plurality of TCI states/spatial relations are enabled by RRC/DCI, and at least one of multiple TRPs based on single DCI and multiple TRPs based on multiple DCI may be interchangeably interpreted. In the present disclosure, multiple TRPs based on multiple DCI and a case that a CORESET pool index (CORESETPoolIndex) value with 1 is configured for a CORESET may be interchangeably interpreted. In the present disclosure, multiple TRPs based on single DCI and a case that at least one code point of a TCI field is mapped to two TCI states may be interchangeably interpreted.

In the present disclosure, TRP #1 (first TRP) may correspond to CORESET pool index = 0, or may correspond to a first TCI state out of two TCI states corresponding to one code point of a TCI field. TRP #2 (second TRP) may correspond to CORESET pool index = 1, or may correspond to a second TCI state out of the two TCI states corresponding to one code point of the TCI field.

In the present disclosure, CORESET 0, a CORESET having index 0, and a common CORESET may be interchangeably interpreted.

In the present disclosure, a target, an application destination, and a destination may be interchangeably interpreted. In the present disclosure, a QCL source, a source, and reference may be interchangeably interpreted.

### (Radio Communication Method)

In the present disclosure, a DL TCI, a DL common TCI, a DL unified TCI, a common TCI, and a unified TCI may be interchangeably interpreted. In the present disclosure, a UL TCI, a UL common TCI, a UL unified TCI, a common TCI, and a unified TCI may be interchangeably interpreted.

In the present disclosure, a case of a joint TCI pool and a case where a joint TCI pool is configured may be interchangeably interpreted. In the present disclosure, a case of a separate TCI pool and a case where a separate TCI pool is configured may be interchangeably interpreted.

In the present disclosure, the case where the joint TCI pool is configured, a case where a TCI pool configured for DL and a TCI pool configured for UL are in common, a case where a TCI pool for both DL and UL is configured, and a case where one TCI pool (one set of TCIs) is configured may be interchangeably interpreted.

In the present disclosure, the case where the separate TCI pool is configured, a case where a TCI pool configured for DL and a TCI pool configured for UL are different from each other, a case where a DL TCI pool (first TCI pool, first TCI set) and a UL TCI pool (second TCI pool, second TCI set) are configured, a case where a plurality of TCI pools (a plurality of sets of TCIs) are configured, and a case where a DL TCI pool is configured may be interchangeably interpreted. When a DL TCI pool is configured, a UL TCI pool may be equal to the configured TCI pool.

In the present disclosure, a channel/RS to which the common TCI is applied may be a PDSCH/HARQ-ACK information/PUCCH/PUSCH/CSI-RS/SRS.

In the present disclosure, a CC/BWP to which a unified TCI state is applied, a destination of application of the unified TCI state, and an application destination may be interchangeably interpreted.

In the present disclosure, a first QCL type and QCL type A may be interchangeably interpreted. Also, a second QCL type and QCL type D may be interchangeably interpreted.

In each embodiment of the present disclosure, a pool including a plurality of unified TCI states may be configured/activated for a UE, and one or more TCI states out of the plurality of unified TCI states may be indicated. The configuration/activation may be performed by using configuration information transmitted via higher layer signaling (for example, RRC signaling/MAC CE). The indication may be performed by using indication information transmitted by using DCI.

Note that in the present disclosure, a signaling structure, signaling, configuration, a structure, configuration information, indication, indication information, and the like may be interchangeably interpreted.

In the present disclosure, BFR, BFR configuration, BFR procedure, BFD, BFD procedure, a BFD-RS, BFD-RS configuration, RLM, RLM configuration, RLM procedure, an RLM-RS, and RLM-RS configuration may be interchangeably interpreted. In the present disclosure, per-cell BFR, cell-specific BFR, and BFR in Rel. 15/16 may be interchangeably interpreted. In the present disclosure, per-TRP BFR, TRP-specific BFR, and BFR in Rel. 17/later versions of Rel. 17 may be interchangeably interpreted.

### <First Embodiment>

An RLM/BFD RS may be indicated by using L1 signaling (for example, DCI). An RLM/BFD RS may be indicated for a UE by using L1 signaling (for example, DCI). When the RLM/BFD RS is not configured, the UE may derive the RLM/BFD RS in accordance with a method described in at least one of Embodiment 1-1 and Embodiment 1-2 below.

### <<Embodiment 1-1>>

The UE may derive the RLM/BFD RS on the basis of QCL assumption/TCI state for a CORESET.

The CORESET may be determined on the basis of at least one of a CORESET monitoring periodicity, a monitoring slot, and a CORESET ID, in a manner similar to that of RLM/BFD in Rel. 15.

For example, the CORESET may be a CORESET with the lowest CORESET ID in the latest monitoring slot. For example, the CORESET may be a CORESET with the highest CORESET ID at the shortest monitoring periodicity.

Note that in the present disclosure, "the shortest" and "the longest" may be interchangeably interpreted. Also, "the lowest" and "the highest" may be interchangeably interpreted.

If the CORESET is applied to a common/unified TCI state, the UE may determine/judge that the common/unified TCI state is used as the RLM/BFD RS.

If the common/unified TCI state is indicated by using the DCI, the UE may determine/judge that the common/unified TCI state is used as the RLM/BFD RS. That is, the RLM/BFD RS may be indicated for the UE by using the DCI.

The DCI may be at least one of a DCI format with DL assignment including an existing TCI field (defined in Rel. 15/16 (or earlier versions)), a DCI format without DL assignment including the existing TCI field, a DCI format without DL assignment including a new TCI field (defined in Rel. 17 (or later versions)), and a new DCI format including a new TCI field.

In the present disclosure, DCI (DCI format) indicating scheduling of neither a PDSCH nor a PUSCH, DCI (DCI format) not indicating PDSCH scheduling, DCI (DCI format) without DL assignment, DCI (DCI format) that does not schedule a PDSCH and that is for DL assignment, DCI (DCI format) that does not schedule a PDSCH and that has a field for DL assignment, and DCI (DCI format) that does not schedule a PDSCH and that includes a TCI field may be interchangeably interpreted. The DCI format with/without the DL assignment may be, for example, DCI format 1_1/1_2. The new DCI format may be represented by DCI format X_Y (X and Y are arbitrary numbers). The new TCI field may be a field for which an unused field out of fields used for existing PDSCH scheduling is reused, or may be a field not defined in Rel. 15/16.

Note that when a plurality of RSs (for example, a QCL type A RS and a QCL type D RS) are configured in one TCI state, the UE may judge/determine to use an RS of a specific QCL type (for example, a QCL type D RS) out of the RSs.

### <<Embodiment 1-2>>

The UE may derive the RLM/BFD RS on the basis of QCL assumption/TCI state for a common/unified TCI state.

For example, when N = M = 1 (that is, when a joint TCI state for a single TRP is configured/indicated), the UE may judge/determine to use, as the RLM/BFD RS, an indicated joint TCI state.

For example, when N = 1 or M = 1 (that is, when a separate TCI state for a single TRP is configured/indicated), the UE may judge/determine to use, as the RLM/BFD RS, an indicated DL TCI state (or UL TCI state).

For example, when N = M > 1 (that is, when a plurality of joint TCI state sets for multiple TRPs are configured/indicated), the UE may judge/determine, for RLM and per-cell BFR, to use, as the RLM/BFD RS, one TCI state out of any one of the plurality of joint TCI state sets.

For example, the one TCI state may be a TCI state with an index of the lowest (first)/highest (last) TCI state set, may be a TCI state related to the lowest (first)/highest (last) set, may be a TCI state related to the lowest (first)/highest (last) CORESET ID/TRP ID, or may be a TCI state related to the lowest (first)/highest (last) TCI state ID.

For example, when N = M > 1, the UE may judge/determine, for per-TRP BFR, to use, as the BFD RS, a total of X TCI states obtained by selecting one TCI state from each of a plurality of (for example, X) joint TCI state sets. For example, the UE may judge/determine to use, as the BFD RS, TCI states (a total of two TCI states) corresponding to two respective TRPs. The UE may assume that a TCI state is indicated for each joint TCI state set by using DCI.

For example, when N > 1 and M > 1 (that is, when separate TCI state sets for multiple TRPs are configured/indicated), the UE may judge/determine, for RLM and per-cell BFR, to use, as the RLM/BFD RS, one DL TCI state (or UL TCI state) out of any one of the plurality of separate TCI state sets. The one DL TCI state (or UL TCI state) may be a TCI state related to the lowest (first)/highest (last) CORESET ID/TRP ID, or may be a TCI state with the lowest (first)/highest (last) index of a single joint TCI state.

Note that when a plurality of RSs (for example, a QCL type A RS and a QCL type D RS) are configured in one TCI state, the UE may judge/determine to use an RS of a specific QCL type (for example, a QCL type D RS) out of the RSs.

### <<Embodiment 1-3>>

A period/timeline/request time between transmission/reception of TCI indication and (a start of) measurement/performance of RLM/BFD may be defined. The period may be a minimum period/minimum time gap between transmission/reception of TCI indication and (a start of) measurement/performance of RLM/BFD.

A timing of the (start of) measurement/performance of the RLM/BFD may be interpreted as a timing of update/change/configuration of an RLM/BFD RS.

The period may be defined in specifications beforehand, may be configured for the UE by using higher layer signaling, or may be reported to a network (NW, for example, a base station) as a UE capability.

The period may be indicated with a specific time (for example, symbol) unit (for example, x symbols), or may be indicated with absolute time (for example, y ms). The period may be differently configured for each subcarrier spacing (configuration), or may be configured in common for different subcarrier spacings (configurations).

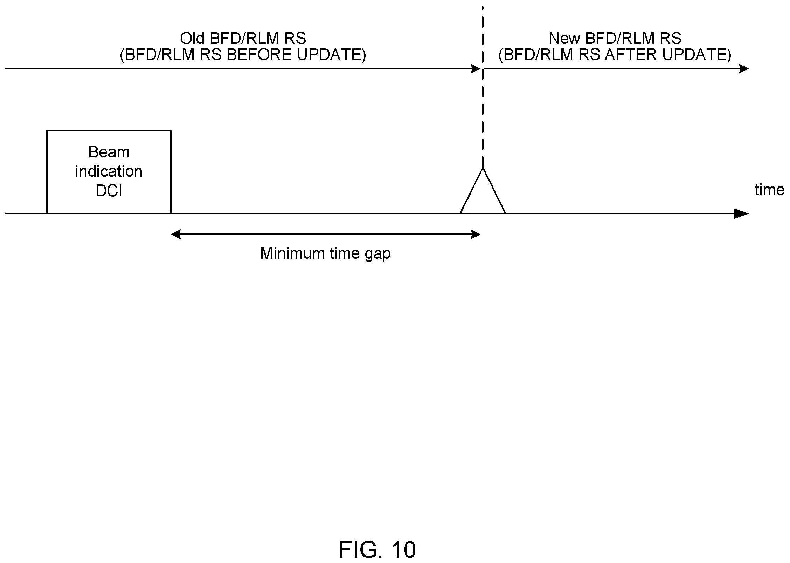

FIG. 10 is a diagram to show an example of the update of the RLM/BFD RS according to Embodiment 1-3. In the example shown in FIG. 10, the UE receives beam indication DCI as the TCI indication. The UE applies, as the RLM/BFD RS, a TCI state indicated by using the beam indication DCI. The UE performs update of the RLM/BFD RS after a specific period (described as minimum time gap) from an end of reception of the beam indication DCI.

Note that a specific field included in at least one of a DCI format defined in Rel. 17 (or later versions) and a DCI format without DL assignment (for example, DCI format 1_1/1_2) may be used for indication of the RLM/BFD RS in the present embodiment. The specific field may be an unused field in the DCI format. This "unused field" may be a field used for DL assignment. When the RLM/BFD RS is indicated for the UE by using the unused field in the DCI format, a name of the field may not be changed, or may be changed to a name of a field for indicating the RLM/BFD RS. Such a field is used, thereby allowing an RLM/BFD RS to be explicitly indicated for the UE.

According to an above first embodiment, it is possible to dynamically update/configure/indicate an RLM/BFD RS by using DCI in a unified/common TCI framework.

### <Second Embodiment>

An RLM/BFD RS may not be explicitly indicated by using L1 signaling (for example, DCI). An RLM/BFD RS may not be explicitly indicated for a UE by using L1 signaling (for example, DCI). When the RLM/BFD RS is not configured, the UE may derive the RLM/BFD RS in accordance with a method described in at least one of Embodiment 2-1 and Embodiment 2-2 below.

### <<Embodiment 2-1>>

The UE may derive the RLM/BFD RS on the basis of QCL assumption/TCI state for a CORESET.

The CORESET may be determined on the basis of at least one of a CORESET monitoring periodicity, a monitoring slot, and a CORESET ID, in a manner similar to that of RLM/BFD in Rel. 15.

For example, the CORESET may be a CORESET with the lowest CORESET ID in the latest monitoring slot. For example, the CORESET may be a CORESET with the highest CORESET ID at the shortest monitoring periodicity.

If the CORESET is applied to a common/unified TCI state, the UE may determine/judge that the common/unified TCI state is used as the RLM/BFD RS.

If the common/unified TCI state is indicated by using DCI, the UE may not use the common/unified TCI state as the RLM/BFD RS. The UE may judge/determine to use, as the RLM/BFD RS, QCL assumption/TCI state for a CORESET corresponding to a TCI state not indicated by using the DCI.

Note that the DCI may be at least one of a DCI format with DL assignment including an existing TCI field (defined in Rel. 15/16 (or earlier versions)), a DCI format without DL assignment including the existing TCI field, a DCI format without DL assignment including a new TCI field (defined in Rel. 17 (or later versions)), and a new DCI format including a new TCI field.

### <<Embodiment 2-2>>

The UE may derive the RLM/BFD RS on the basis of QCL assumption/TCI state for a common/unified TCI state.

### [Embodiment 2-2-1]

When applying a joint TCI pool for UL and DL, the UE may judge/determine to use, as the RLM/BFD RS, any joint TCI state (active joint TCI state) in the joint TCI pool.

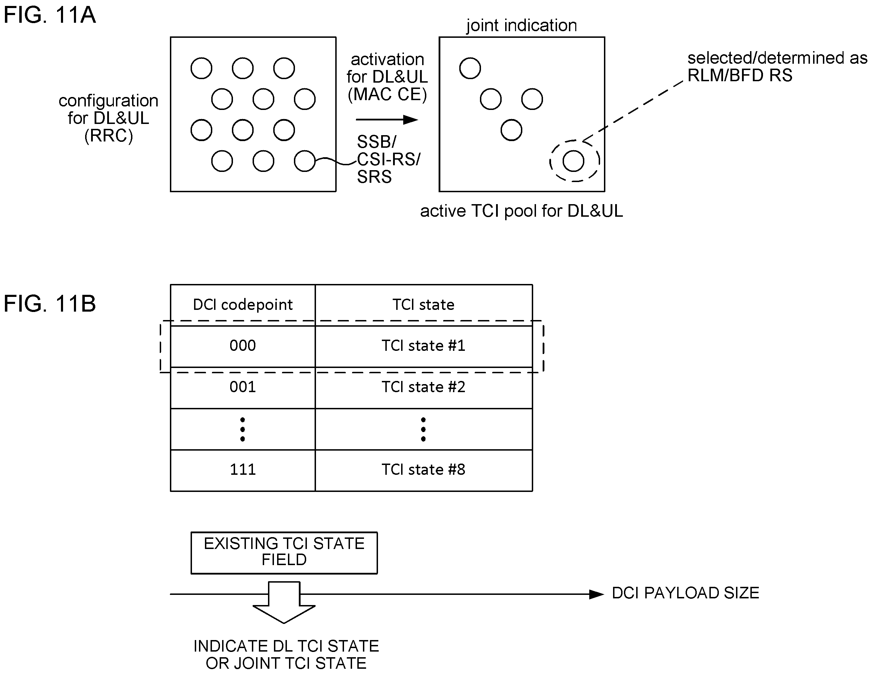

For example, the joint TCI state used as the RLM/BFD RS may be a joint TCI state (active joint TCI state) corresponding to the lowest (first)/highest (last) joint TCI state ID in a joint TCI pool, or may be a joint TCI state corresponding to the lowest (first)/highest (last) code point of a TCI field for indicating a joint TCI state. For example, as shown in FIG. 11B, this TCI field may be a TCI field included in an existing DCI format (here, DCI format 1_1/1_2 with DL assignment), or may be a new field in a new DCI format. This TCI field may be a field used for indication of a separate DL TCI state, or may be a field used for indication of a joint TCI state.

FIG. 11A is a diagram to show an example of the RLM/BFD RS determination according to Embodiment 2-2-1. In FIG. 11A, RRC-based common TCI state configuration for the UL and DL and MAC CE-based common TCI state activation for the UL and DL are similar to those of FIG. 2A.

In the example shown in FIG. 11A, the UE judges/determines to use, as the RLM/BFD RS, one joint TCI state out of common TCI states for the UL and DL activated by using a MAC CE.

FIG. 11B is a diagram to show another example of the RLM/BFD RS determination according to Embodiment 2-2-1. In the example shown in FIG. 11B, the UE judges/determines to use, as the RLM/BFD RS, a TCI state (TCI state #1) corresponding to the lowest code point (0000) on the basis of an association (list/table) between code points of the TCI field and TCI states in the joint TCI pool.

### [Embodiment 2-2-2]

When applying separate TCI pools for the UL and DL, the UE may judge/determine to use, as the RLM/BFD RS, any DL TCI state (active DL TCI state) (or UL TCI state (active UL TCI state)) in the separate TCI pools.

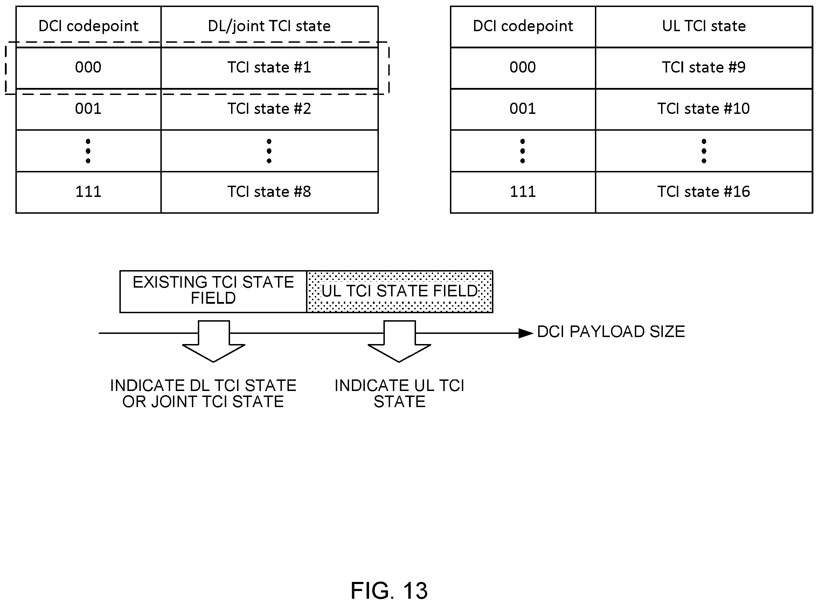

For example, the DL TCI state used as the RLM/BFD RS may be a DL TCI state (active TCI state) corresponding to the lowest (first)/highest (last) TCI state ID in a DL TCI pool (DL TCIs), or may be a DL TCI state corresponding to the lowest (first)/highest (last) code point of a TCI field for indicating a DL TCI state. For example, as shown in FIG. 13, this TCI field may be a TCI field (existing TCI field) included in an existing DCI format (here, DCI format 1_1/1_2 with DL assignment), or may be a new field in a new DCI format. This TCI field may be a field used for indication of a separate DL TCI state, or may be a field used for indication of a joint TCI state.

For example, the UL TCI state may be a UL TCI state (active TCI state) corresponding to the lowest (first)/highest (last) UL TCI state ID in a UL TCI pool (UL TCIs), or may be a UL TCI corresponding to the lowest (first)/highest (last) code point of a TCI field for indicating a UL TCI state. For example, as shown in FIG. 13, this TCI field may be a new field (for example, a UL TCI field) in a new DCI format. The new DCI format may include a field for a DL TCI state or a joint TCI state and a field for a UL TCI state.

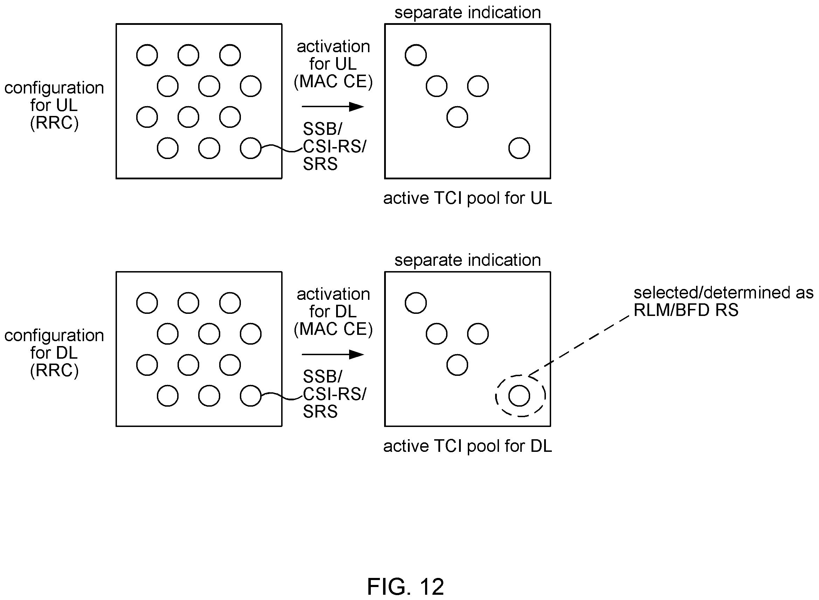

FIG. 12 is a diagram to show an example of the RLM/BFD RS determination according to Embodiment 2-2-2. In FIG. 12, TCI states (TCI state pool) for the UL and TCI states (TCI state pool) for the DL are configured. UL TCI states and DL TCI states are configured by RRC, and a UL TCI state and a DL TCI state are activated by a MAC CE.

In the example shown in FIG. 12, the UE judges/determines to use, as the RLM/BFD RS, one DL TCI state out of DL TCI states activated by using the MAC CE.

FIG. 13 is a diagram to show another example of the RLM/BFD RS determination according to Embodiment 2-2-2. In the example shown in FIG. 13, the UE judges/determines to use, as the RLM/BFD RS, a TCI state (TCI state #1) corresponding to the lowest code point (0000) on the basis of an association (list/table) between code points of the TCI field for the DL TCI state and TCI states in the DL TCI pool.

Note that a DCI format shown in FIG. 13 may be a DCI format defined in Rel. 17 (or later versions) or a DCI format without DL assignment (for example, DCI format 1_1/1_2).

According to an above second embodiment, it is possible to update/configure/indicate an RLM/BFD RS without using DCI in a unified/common TCI framework.

### <Third Embodiment>

An RLM/BFD RS may be indicated/updated by using a MAC CE. The RLM/BFD RS may be indicated/updated for a UE by using the MAC CE.

### <Embodiment 3-1>

The MAC CE used for indication/update of the RLM/BFD RS may include a plurality of bit fields indicating RS IDs (a list of a plurality of RS IDs). The UE may judge/determine an update destination RLM/BFD RS on the basis of the bit fields indicating the plurality of RS IDs.

The MAC CE may include at least one of a bit field indicating a BWP ID, a bit field indicating a serving cell ID, a bit field indicating an RS ID (for example, a CSI-RS ID/SSB ID), and a field indicating which of RLM or BFD the MAC CE is used for.

The plurality of RS IDs included in the MAC CE (which may be referred to as an RS ID list) may be configured for the UE by using RRC, or may be implicitly derived by the UE on the basis of a plurality of (for example, all) SSB IDs.

The bit field indicating the RS ID may be bitmap indication indicating an RS ID of an RS to be used as the RLM/BFD RS. For example, when the bit field indicating the RS ID indicates a first value (for example, 0), the UE may judge that an RS corresponding to the RS ID is not used as the RLM/BFD RS. When the bit field indicating the RS ID indicates a second value (for example, 1), the UE may judge that an RS corresponding to the RS ID is used as the RLM/BFD RS.

The MAC CE may not include a field indicating which of RLM or BFD the MAC CE is used for. In this case, the UE may judge that the MAC CE is used for update/indication of at least one of the RLM RS and the BFD RS.

The MAC CE may include a bit field indicating a TRP ID/CORESET ID for multi-TRP BFR.

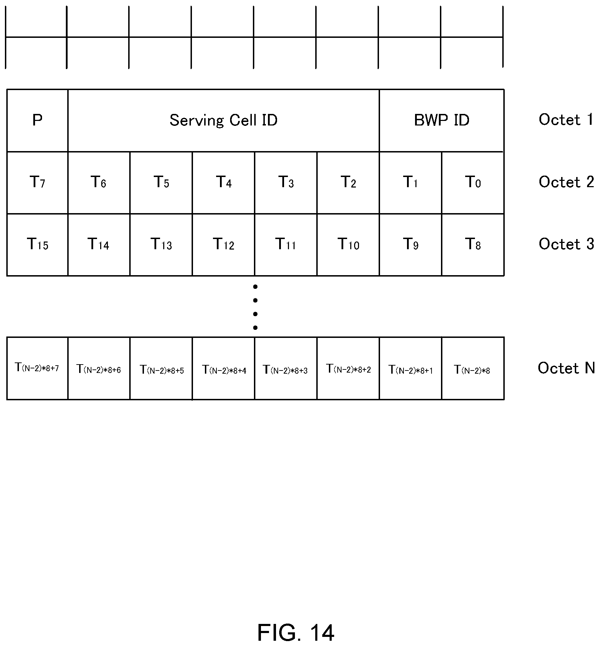

FIG. 14 is a diagram to show an example of the MAC CE according to Embodiment 3-1. The MAC CE shown in FIG. 14 includes a bit field indicating a BWP ID, a bit field indicating a serving cell ID, a bit field indicating a CSI-RS ID/SSB ID (described as Tₙ), and a field indicating which of RLM or BFD the MAC CE is used for (described as P).

Note that when update of the BFD/RLM RS is explicitly performed by using the MAC CE as described in the present embodiment, the above-described first embodiment and second embodiment may not be employed. In this case, the UE may assume that the BFD/RLM RS is updated by the MAC CE.

### <Embodiment 3-2>

The MAC CE used for indication/update of the RLM/BFD RS may include a plurality of bit fields indicating RS IDs (a list of a plurality of RS IDs). The UE may judge/determine an update destination RLM/BFD RS on the basis of the bit fields indicating the plurality of RS IDs.

The MAC CE may include at least one of a bit field indicating a BWP ID, a bit field indicating a serving cell ID, a bit field indicating an RS ID (for example, a CSI-RS ID/SSB ID), and a field indicating which of RLM or BFD the MAC CE is used for.

The plurality of RS IDs included in the MAC CE (which may be referred to as an RS ID list) may be configured for the UE by using RRC, or may be implicitly derived by the UE on the basis of a plurality of (for example, all) SSB IDs.

The bit field indicating the RS ID may be a field indicating an RS ID of an RS to be used as the RLM/BFD RS.

The MAC CE may not include a field indicating which of RLM or BFD the MAC CE is used for. In this case, the UE may judge that the MAC CE is used for update/indication of at least one of the RLM RS and the BFD RS.

The MAC CE may include a bit field indicating a TRP ID/CORESET ID for multi-TRP BFR.

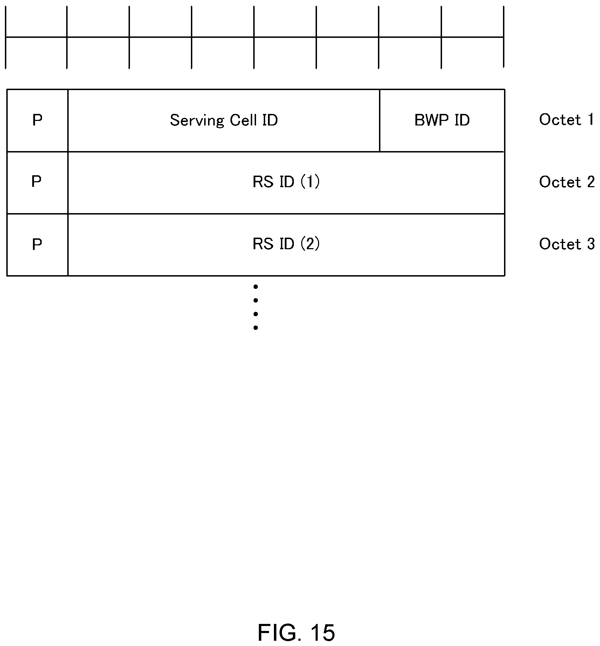

FIG. 15 is a diagram to show an example of the MAC CE according to Embodiment 3-2. The MAC CE shown in FIG. 15 includes a bit field indicating a BWP ID, a bit field indicating a serving cell ID, a bit field indicating a CSI-RS ID/SSB ID (described as RS ID (n)), and a field indicating which of RLM or BFD the MAC CE is used for (described as P).

Note that structures of the MAC CEs shown in FIGS. 14 and 15 are just examples, and fields included in the MAC CEs, the numbers of bits of the respective fields, and arrangement of the respective fields are not limited to this. These MAC CEs may include reserved bits.

According to a structure of the MAC CE of Embodiment 3-2, the number of RS IDs can be reduced as compared to a structure of the MAC CE of Embodiment 3-1, and signaling overhead of the MAC CE can be reduced.

### <Embodiment 3-3>

A MAC CE used for indication/update of the RLM/BFD RS may include information related to a new beam candidate RS for BFR (Embodiment 3-3-1). The information related to the new beam candidate RS for BFR may be a list including one or more new beam candidate RSs for BFR.

In this case, in addition to/in place of the fields described in Embodiment 3-1 and Embodiment 3-2 mentioned above, a field for indicating a new beam candidate RS for BFR may be included.

The field indicating which of RLM or BFD the MAC CE is used for, which is described in Embodiment 3-1 and Embodiment 3-2 mentioned above, may be interpreted as a field indicating whether the MAC CE indicates an RLM/BFD RS or a new beam candidate RS.

Note that the number of new beam candidate RSs is typically large (for example, 32 or 64) (as compared to the number of RLM/BFD RSs), and thus it is preferable that Embodiment 3-3-1 uses the structure of the MAC CE described in Embodiment 3-1 described above.

Aside from the MAC CE used for the indication/update of the RLM/BFD RS, a MAC CE including information related to a new beam candidate RS for BFR may be defined (Embodiment 3-3-2).

For example, the present embodiment is suitable for a case where the new beam candidate RS is updated with consideration of complexity of the UE in a case where a physical location of the UE is changed or the like.

According to an above third embodiment, it is possible to update/configure/indicate an RLM/BFD RS by using a MAC CE in a unified/common TCI framework.

### <Fourth Embodiment>

A higher layer parameter (RRC IE)/UE capability corresponding to a function (characteristic, feature) in at least one of a plurality of embodiments described above may be defined. The UE capability may indicate that this function is supported.

A UE for which the higher layer parameter (for enabling the function) corresponding to the function has been configured may perform the function. "A case that a UE for which the higher layer parameter corresponding to the function has not been configured does not perform the function (for example, follows Rel. 15/16)" may be defined.

A UE that has reported the UE capability indicating that the function is supported may perform the function. "A case that a UE that has not reported the UE capability indicating that the function is supported does not perform the function (for example, follows Rel. 15/16)" may be defined.

When a UE has reported the UE capability indicating that the function is supported, and the higher layer parameter corresponding to the function has been configured, the UE may perform the function. "A case that when a UE does not report the UE capability indicating that the function is supported or when the higher layer parameter corresponding to the function is not configured, the UE does not perform the function (for example, follows Rel. 15/16)" may be defined.

The UE capability may indicate whether the UE supports this function.

The function may be a unified TCI state framework in CA or a unified TCI state framework applied to a plurality of CCs/BWPs.

The UE capability may be defined by whether to support at least one of a unified TCI state framework, a joint/separate TCI pool, and joint/separate beam indication.

The UE capability may be defined by the number of TCI states supported by the UE, the number of TCI states being for common beam indication and configured by RRC. The common beam indication and each of UL separate beam indication and DL separate beam indication may be interchangeably interpreted. The common beam indication may be interpreted as at least one of common beam indication, UL separate beam indication, and DL separate beam indication.

The UE capability may be defined by the number of active TCI states supported by the UE, the number of active TCI states being for common beam indication. The common beam indication and each of UL separate beam indication and DL separate beam indication may be interchangeably interpreted. The common beam indication may be interpreted as at least one of common beam indication, UL separate beam indication, and DL separate beam indication.

The UE capability may be defined by at least one of N and M supported by the UE.

The UE capability may be defined by whether a TCI state is indicated by DCI. For example, the UE capability may be defined by whether to support a case that a common TCI state is indicated by using at least one of a new DCI format or a DCI format without DL assignment (DCI format 1_1/1_2).

The UE capability may be defined by whether an RLM/BFD RS can be selected/determined by using DCI (for example, beam indication DCI) (first embodiment).

The UE capability may be defined by whether an RLM/BFD RS can be selected/determined on the basis of an active TCI pool (second embodiment).

The UE capability may be defined by whether an RLM/BFD RS can be updated/determined by using a MAC CE (third embodiment). The UE capability may be defined by the number of RLM/BFD RSs capable of being updated/determined by using a MAC CE.

According to an above fourth embodiment, the UE can achieve the above-described function while maintaining compatibility with existing specifications.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

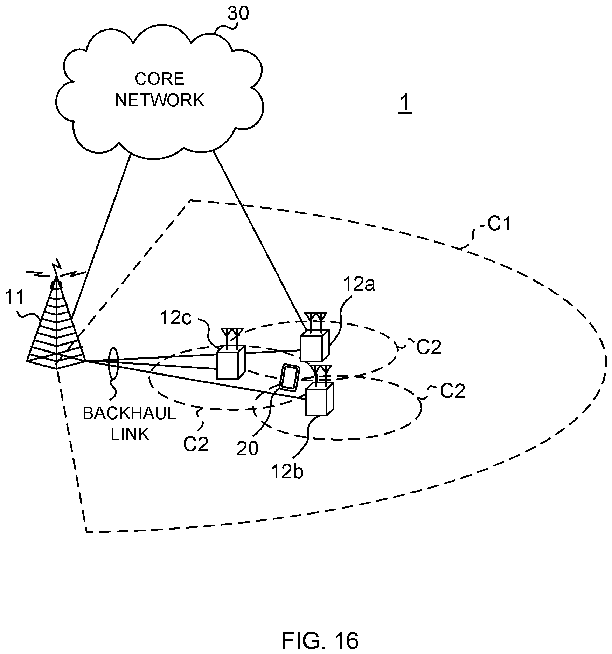

FIG. 16 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

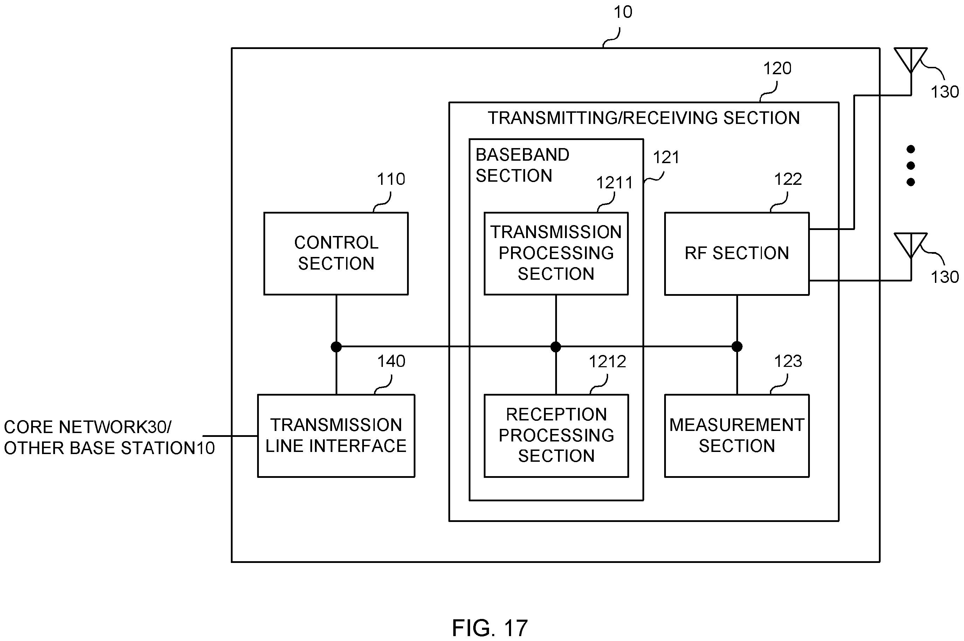

FIG. 17 is a diagram to show an example of a structure of a base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit information indicating a plurality of transmission configuration indication (TCI) states applicable to multiple types of channels in one or more cells, and may transmit at least one of a Medium Access Control (MAC) control element indicating at least one of one or more TCI states out of the plurality of TCI states, a first reference signal for radio link monitoring (RLM) procedure, and a second reference signal for beam failure detection (BFD) procedure and downlink control information (DCI) indicating one or more TCI states out of the plurality of TCI states. When at least one of the first reference signal and the second reference signal is not configured by using a Radio Resource Control (RRC) information element, the control section 110 may indicate at least one of the first reference signal and the second reference signal by using either of the MAC CE and the DCI (first to third embodiments).

### (User Terminal)

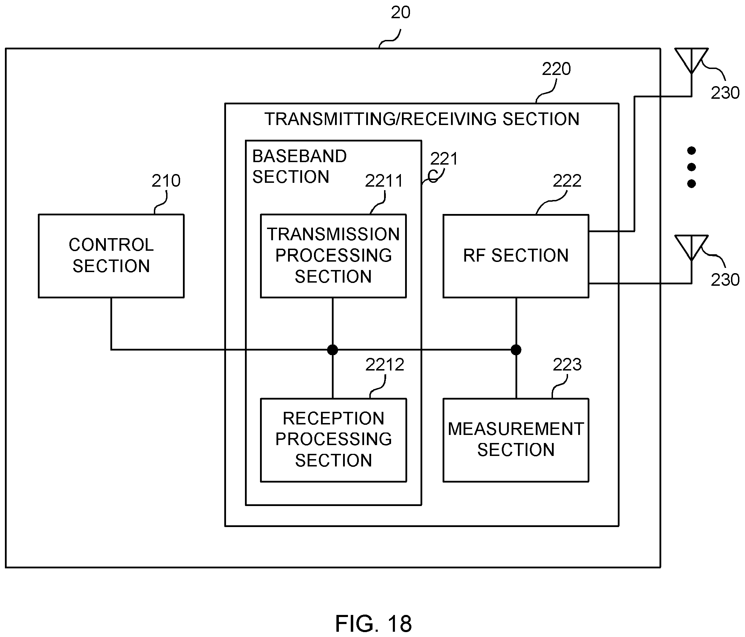

FIG. 18 is a diagram to show an example of a structure of a user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

The transmitting/receiving section 220 may receive information indicating a plurality of transmission configuration indication (TCI) states applicable to multiple types of channels in one or more cells, and may receive at least one of a Medium Access Control (MAC) control element indicating at least one of one or more TCI states out of the plurality of TCI states, a first reference signal for radio link monitoring (RLM) procedure, and a second reference signal for beam failure detection (BFD) procedure and downlink control information (DCI) indicating one or more TCI states out of the plurality of TCI states. When at least one of the first reference signal and the second reference signal is not configured by using a Radio Resource Control (RRC) information element, the control section 210 may determine at least one of the first reference signal and the second reference signal on the basis of either of the MAC CE and the DCI (first to third embodiments).

The DCI may indicate an uplink/downlink common TCI state. The control section 210 may use, as at least one of the first reference signal and the second reference signal, the uplink/downlink common TCI state indicated by the DCI (first embodiment).

The DCI may separately indicate an uplink TCI state and a downlink TCI state. The control section 210 may use, as at least one of the first reference signal and the second reference signal, the downlink TCI state indicated by the DCI (first embodiment).

The control section 210 may use, as at least one of the first reference signal and the second reference signal, a TCI state corresponding to a lowest TCI state ID in the information indicating the plurality of TCI states (second embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

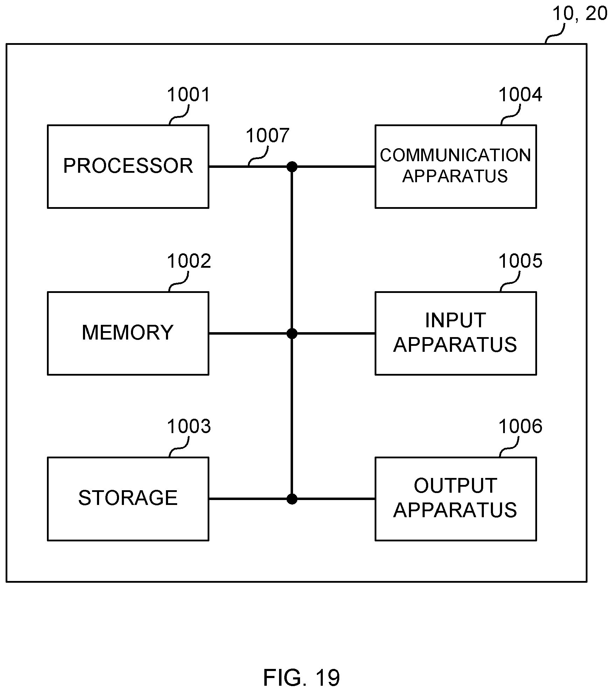

For example, a base station, a user terminal, and so on according to one embodiment of the present disclosure may function as a computer that executes the processes of the radio communication method of the present disclosure. FIG. 19 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink," "downlink," and the like may be interpreted as the words corresponding to the terminal-to-terminal communication (for example, "sidelink"). For example, an uplink channel, a downlink channel, and the like may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives information indicating a plurality of transmission configuration indication (TCI) states applicable to multiple types of channels in one or more cells and that receives at least one of a Medium Access Control (MAC) control element indicating at least one of one or more TCI states out of the plurality of TCI states, a first reference signal for radio link monitoring (RLM) procedure, and a second reference signal for beam failure detection (BFD) procedure and downlink control information (DCI) indicating one or more TCI states out of the plurality of TCI states; and
a control section that, when at least one of the first reference signal and the second reference signal is not configured by using a Radio Resource Control (RRC) information element, determines at least one of the first reference signal and the second reference signal on the basis of either of the MAC CE and the DCI.

2. The terminal according to claim 1, wherein
the DCI indicates an uplink/downlink common TCI state, and
the control section uses, as at least one of the first reference signal and the second reference signal, the uplink/downlink common TCI state indicated by the DCI.

3. The terminal according to claim 1, wherein
the DCI separately indicates an uplink TCI state and a downlink TCI state, and
the control section uses, as at least one of the first reference signal and the second reference signal, the downlink TCI state indicated by the DCI.

4. The terminal according to claim 1, wherein
the control section uses, as at least one of the first reference signal and the second reference signal, a TCI state corresponding to a lowest TCI state ID in the information indicating the plurality of TCI states.

5. A radio communication method for a terminal, the radio communication method comprising:
receiving information indicating a plurality of transmission configuration indication (TCI) states applicable to multiple types of channels in one or more cells and receiving at least one of a Medium Access Control (MAC) control element indicating at least one of one or more TCI states out of the plurality of TCI states, a first reference signal for radio link monitoring (RLM) procedure, and a second reference signal for beam failure detection (BFD) procedure and downlink control information (DCI) indicating one or more TCI states out of the plurality of TCI states; and
determining, when at least one of the first reference signal and the second reference signal is not configured by using a Radio Resource Control (RRC) information element, at least one of the first reference signal and the second reference signal on the basis of either of the MAC CE and the DCI.

6. A base station comprising:
a transmitting section that transmits information indicating a plurality of transmission configuration indication (TCI) states applicable to multiple types of channels in one or more cells and that transmits at least one of a Medium Access Control (MAC) control element indicating at least one of one or more TCI states out of the plurality of TCI states, a first reference signal for radio link monitoring (RLM) procedure, and a second reference signal for beam failure detection (BFD) procedure and downlink control information (DCI) indicating one or more TCI states out of the plurality of TCI states; and
a control section that, when at least one of the first reference signal and the second reference signal is not configured by using a Radio Resource Control (RRC) information element, indicates at least one of the first reference signal and the second reference signal by using either of the MAC CE and the DCI.
